(19) **Europäisches Patentamt / European Patent Office / Office européen des brevets**

(11) **EP 3 502 845 B1**

(12) **FASCICULE DE BREVET EUROPEEN**

(45) Date de publication et mention de la délivrance du brevet:
**30.03.2022 Bulletin 2022/13**

(21) Numéro de dépôt: **18201582.6**

(22) Date de dépôt: **19.10.2018**

(51) Classification Internationale des Brevets (IPC):
**G06F 3/01** (2006.01)   **G01C 23/00** (2006.01)
**F41G 3/22** (2006.01)   **G02B 27/01** (2006.01)

(52) Classification Coopérative des Brevets (CPC):
**G01C 23/005; G02B 27/017; G06F 3/011;**
**G06F 3/012;** G02B 2027/0138; G02B 2027/014;
G02B 2027/0187

(54) **PROCEDE ET SYSTEME D'HARMONISATION DUALE D'UN SYSTEME D'AFFICHAGE TETE HAUTE PORTE AVEC UN DISPOSITIF INERTIEL D'ATTITUDE AMOVIBLE DANS LE COCKPIT**

VERFAHREN UND SYSTEM ZUR DUALEN HARMONISIERUNG EINES BORD-HEAD-UP-ANZEIGESYSTEMS MIT EINER ABNEHMBAREN TRÄGHEITSHALTUNGSVORRICHTUNG IN EINEM COCKPIT

METHOD AND SYSTEM FOR DUAL HARMONISATION OF A WORN HEAD-UP DISPLAY SYSTEM WITH A REMOVABLE INERTIAL ATTITUDE DEVICE IN THE COCKPIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701341**

(43) Date de publication de la demande:
**26.06.2019 Bulletin 2019/26**

(73) Titulaire: **Thales**
**92400 Courbevoie (FR)**

(72) Inventeurs:
• **AYMERIC, Bruno**
**33160 SAINT MEDARD EN JALLES (FR)**
• **ROUZES, Siegfried**
**33700 MERIGNAC (FR)**
• **CAPELLE, Bruno**
**33700 MERIGNAC (FR)**
• **ELLERO, Sébastien**
**33600 PESSAC (FR)**

(74) Mandataire: **Marks & Clerk France**
**Immeuble "Visium"**
**22, avenue Aristide Briand**
**94117 Arcueil Cedex (FR)**

• TUCERYAN M ET AL: "Single point active alignment method (SPAAM) for optical see-through HMD calibration for AR", AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5 octobre 2000 (2000-10-05), pages 149-158, XP010520324, DOI: 10.1109/ISAR.2000.880938 ISBN: 978-0-7695-0846-7
• JANIN A L ET AL: "Calibration of head-mounted displays for augmented reality applications", VIRTUAL REALITY ANNUAL INTERNATIONAL SYMPOSIUM, 1993., 1993 IEEE SEATTLE, WA, USA 18-22 SEPT. 1, NEW YORK, NY, USA,IEEE, 18 septembre 1993 (1993-09-18), pages 246-255, XP010130485, DOI: 10.1109/VRAIS.1993.380772 ISBN: 978-0-7803-1363-7
• YAKUP GENC ET AL: "Practical Solutions for Calibration of Optical See-Through Devices", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30 septembre 2002 (2002-09-30), page 169, XP058274986, ISBN: 978-0-7695-1781-0

(56) Documents cités:
**WO-A1-2015/165838   WO-A2-2009/081177**

- **JENS GRUBERT ET AL: "A Survey of Calibration Methods for Optical See-Through Head-Mounted Displays", ARXIV.ORG, CORNELL UNIVERSITY LIBRARY, 201 OLIN LIBRARY CORNELL UNIVERSITY ITHACA, NY 14853, 13 septembre 2017 (2017-09-13), XP080820787, DOI: 10.1109/TVCG.2017.2754257**

## Description

La présente invention concerne un procédé d'harmonisation duale d'un système l'affichage tête haute porté pour rendre conforme l'affichage d'informations de pilotage d'un aéronef avec le monde réel extérieur.

L'invention se situe dans le domaine technique de l'Interface Homme Système (IHS) de pilotage pour des aéronefs, comme par exemple des hélicoptères ou des avions, équipés d'un système d'affichage porté en tête haute ou monté sur casque (en anglais Head Worn Display HWD ou Helmet Mounted Display HMD) et d'un Dispositif de Détection de Posture de tête DDP.

Les dispositifs d'affichage en tête haute, qu'ils soient portés ou non, permettent d'afficher notamment une « symbologie » conforme au monde extérieur, c'est-à-dire un ensemble de symboles dont la position face à l'œil du pilote permet une superposition avec les éléments correspondants dans le monde réel extérieur. Il peut s'agir par exemple d'un vecteur de vitesse, d'une cible au sol comme un symbole représentant une piste d'atterrissage, d'une représentation synthétique du terrain ou encore d'une image de capteur.

De tels dispositifs d'affichage en tête haute, qu'ils soient portés ou non, sont décrits par exemple dans les documents suivants :

.- la demande brevet WO 2015/165838 A1 ;
.- la demande de brevet WO 2009/081177 A2 ;
.- l'article de Tuceryan M. et al., intitulé « Single point active alignment method (SPAAM) for optical see-through HMD calibration for AR », publié dans Augmented Reality, 2000, (ISAR 2000), Symposium on Munich, Germany 5-6 oct. 2000, Piscataway, NJ, USA, IEEE, US, 5 octobre 2000, pages 149-158 ;
.- l'article de Janin A.L. et al., intitulé « Calibration of head mounted displays for augmented reality applications », publié dans Virtual Reality Annual International Symposium, 1993., 1993 IEEE Seattle, WA, USA 18-22 september 1, New York, NY, USA, IEEE, 18 septembre 1993, pages 246-255 ;
.- l'article de Yakup Genc et al., intitulé "Practical Solutions for Calibration of Optical See-Through Devices", publié dans Proceedings / International Symposium on mixed and augmented reality : ISMAR 2002; September 30 - October 1, 2002, Darmstadt, Germany, IEEE Computer Society, Los Alamitos, California, 30 septembre 2002, page 169;
.- l'article de Jens Grubert et al., intitulé "A survey of calibration methods for optical See-Through Head-Mounted displays", publié dans ARXIV.ORG, Cornell University Library, 201 OLIN library Cornell university Ithaca, NY 14853, 13 septembre 2017.

Cet affichage conforme nécessite de connaître la position et l'attitude de l'aéronef et, pour les dispositifs d'affichage portés sur la tête, l'attitude de l'afficheur par rapport à un repère fixe lié à l'aéronef. Ces différentes position et attitudes sont fournies par les systèmes avioniques pour celles de l'aéronef, et par le Dispositif de Détection de posture DDP pour celles de l'afficheur.

Par exemple et notamment, les systèmes avioniques de fourniture de la position et de l'attitude d'un aéronef peuvent être :

.- un dispositif de positionnement global de type GPS (en anglais Global Positionning System) ; et
.- un Système de Référence Inertielle IRS (en anglais Inertial Reference System) à base de gyroscopes et d'accéléromètres de type MEMS (en anglais Micro Electro Mechanical Systems) ou de gyroscope

laser, ou un système de référence en attitude et en direction de cap AHRS (en anglais Attitude and Heading Reference System AHRS).

De manière connue, une harmonisation du système d'affichage tête haute est effectuée à l'installation d'un système d'affichage tête haute, porté ou non porté, dans le cockpit afin de calculer les corrections d'angles à apporter pour passer du repère afficheur au repère aéronef, et afin d'obtenir un affichage tête haute conforme.

A ce jour et de manière connue, le système avionique de fourniture de l'attitude de l'aéronef par rapport à la Terre, appelé par la suite le dispositif inertiel d'attitude, est :

.- attaché solidairement de manière rigide à la plateforme de l'aéronef, ce qui requiert une procédure longue d'harmonisation pour aligner ledit dispositif inertiel d'attitude sur ladite plateforme, ou
.- attaché au dispositif fixe de confiance (en anglais « fiducial device), lié à la plateforme, ce qui requiert également une procédure longue d'harmonisation pour aligner ledit dispositif inertiel d'attitude sur la plateforme de l'aéronef.

De nombreuses plateformes d'aéronefs comme par exemple des hélicoptères ou des avions légers ne sont pas à ce jour équipées de moyens inertiels classiques de fourniture de leur propre attitude par rapport à la Terre mais depuis récemment il devient possible d'utiliser des petits équipements inertiels capables de fournir au pilote cette information d'attitude avec des performances relativement correctes. Ces équipements peuvent facilement être conditionnés dans des modules amovibles que l'on peut « ventouser », c'est-à-dire fixer à l'aide d'une ventouse, sur le pare-brise de la structure porteuse du cockpit. Ces équipements inertiels de petite taille incluent également un dispositif de fourniture de position de l'équipement et donc de l'aéronef.

Suivant un premier inconvénient, le caractère amovible de cet équipement inertiel avec une configuration nouvelle de la fixation à chaque déplacement dudit équipement inertiel requiert la mise en œuvre d'une procédure d'une nouvelle harmonisation précise et rapide du système d'affichage conforme.

Suivant un deuxième inconvénient, cet équipement inertiel a une connaissance du cap de l'aéronef relativement peu précise en absence de mouvement de la plateforme. Certes, la présence d'un dispositif de positionnement, par exemple de type GPS, intégré dans l'équipement, et des algorithmes d'hybridation permettent d'affiner la connaissance du cap pendant les évolutions du mouvement de l'aéronef, mais au sol, avant le décollage, la valeur que l'on connait du cap est relativement erronée.

Un premier problème technique est de fournir un système d'affichage tête haute porté pour rendre conforme l'affichage d'informations de pilotage d'un aéronef avec le monde réel extérieur et un procédé d'harmonisation des éléments entre eux dudit système d'affichage tête haute qui permettent de connaitre rapidement et précisément l'orientation relative du dispositif inertiel d'attitude de l'équipement inertiel amovible, facilement déplaçable, par rapport à l'élément fixe de confiance lié à la plateforme, constituant également l'élément fixe du sous-système de détection de posture DDP.

Un deuxième problème technique est de fournir un système d'affichage tête haute porté et un procédé d'harmonisation qui permettent de connaitre rapidement et précisément l'orientation relative du dispositif inertiel d'attitude de l'équipement inertiel amovible, facilement déplaçable, par rapport à l'élément fixe de confiance lié à la plateforme, et l'orientation relative de l'afficheur du système d'affichage tête haute porté par rapport à l'élément mobile de poursuite du sous-système de détection de poursuite DDP.

Un troisième problème technique est de fournir un système d'affichage tête haute pour rendre conforme l'affichage d'informations de pilotage d'un aéronef avec le monde réel extérieur et un procédé d'harmonisation qui permettent de connaitre rapidement et précisément l'orientation relative du dispositif inertiel d'attitude de l'équipement inertiel amovible, facilement déplaçable, par rapport à la plateforme de l'aéronef.

A cet effet, l'invention a pour objet un procédé d'harmonisation duale d'un système d'affichage tête haute porté pour rendre conforme l'affichage d'informations de pilotage d'un aéronef sur un afficheur avec le monde réel extérieur, le système d'affichage tête haute porté comprenant : un afficheur D0 de tête haute porté transparent ; un sous-système de détection de posture de tête DDP ayant un premier élément mobile de poursuite D1 attaché solidairement à l'afficheur transparent D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel d'attitude D3 de fourniture de l'attitude relative M3t de la plateforme par rapport à un repère terrestre lié à la Terre, amovible et apte à être fixé solidairement à la plateforme sur un pare-brise du cockpit pendant une durée d'opération de l'aéronef quelconque ; un sous-système d'harmonisation du système d'affichage tête haute porté pour rendre conforme l'affichage d'informations de pilotage sur l'afficheur D0 avec le monde réel extérieur, le sous-système d'harmonisation ayant un calculateur d'harmonisation et un Interface Homme Système pour gérer et réaliser la mise en œuvre du procédé d'harmonisation duale.

Le procédé d'harmonisation duale est caractérisé en ce qu'il comprend : une première étape de fourniture d'un équipement inertiel augmenté D3p+ intégrant solidairement dans un même ensemble le dispositif inertiel d'attitude D3 de l'aéronef, et une caméra pour prendre une ou plusieurs photos du monde réel extérieur, la caméra et le dispositif inertiel d'attitude D3 de l'aéronef étant solidairement liés; une deuxième étape d'acquisitions de mesures $\hat{K}_i$ dans laquelle une série d'un nombre entier N, supérieur ou égal à 3, de visées Vi différentes sont effectuées, i variant de 1 à N, effectuées au travers de l'afficheur semi-transparent D0, en alignant avec le monde réel extérieur des images de rang i différentes, désignées par image(i), figées sur ledit afficheur D0, et représentant chacune une même photo, prise avant la première visée V1 par la caméra de l'équipement inertiel augmenté D3p+, vue avec une orientation angulaire différente Oi prédéterminée, exprimée en termes de trois angles d'Euler de gisement, site et roulis, correspondant à une matrice M(image(i)/0) du repère « image(i)de l'image de rang i vers le repère « 0 » de l'afficheur D0, et dans laquelle pour chaque visée Vi réalisée, i variant de 1 à N, le sous-système de détection de posture DDP mesure et détermine l'orientation relative $\hat{K}_i$ correspondante du premier élément de poursuite D1 par rapport au deuxième élément fixe D2, lié à la plateforme de l'aéronef ; puis une troisième étape dans laquelle le calculateur d'harmonisation duale calcule conjointement la matrice d'orientation relative M01 entre l'afficheur D0 dans une position basculée et le premier élément de poursuite D1 et la matrice d'orientation relative M23 entre le deuxième élément fixe D2 du sous-système de détection de posture DDP et le dispositif inertiel d'attitude D3 comme respectivement la matrice droite $\hat{D}$ et la matrice gauche G solutions conjointes du système d'équations d'harmonisation : $\hat{U}_i = G \cdot \hat{K}_i \cdot \hat{D}$ , i variant de 1 à N, dans lequel $\hat{U}_i$ est la transposée de la matrice M(image(i)/0).

Suivant des modes particuliers de réalisation, le procédé d'harmonisation duale d'un système d'affichage tête haute porté comporte l'une ou plusieurs des caractéristiques suivantes, prises isolément ou en combinaison :

.- le minimum du nombre de mesures N requis dépend du nombre L de degrés de liberté angulaire des rotations M01 et M3t du système d'affichage HMD erronées ou inexploitables, ledit nombre L étant un entier supérieur ou égal à 1 et inférieur ou égal à 6, et la résolution du système d'équations $\hat{U}_i = G \cdot \hat{K}_i \cdot \hat{D}$ , i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la rotation à droite $\hat{D}$ et la rotation à gauche G;

.- le nombre N est supérieur ou égal à 3, et la troisième étape de résolution du système d'équations d'harmonisation duale comprend un premier ensemble de sous étapes consistant à : dans une première sous-étape, choisir une mesure "pivot" comme étant la première mesure parmi les N mesures et correspondant à i égal à 1, et pour i = 2, ...,N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$; puis dans une deuxième sous-étape, déterminer pour i = 2,···, N , les vecteurs unitaires principaux des rotations $\hat{U}_{1,i}$ et $\hat{K}_{1,i}$, désignés respectivement par $\vec{u}_i$ et $\vec{k}_i$ ; ensuite dans une troisième sous-étape, calculer la matrice droite $\hat{D}$ , i.e. M01, à l'aide de l'équation :

$\hat{D} = \pi(\Sigma_{i \geq 2}(\vec{k}_i \cdot \vec{u}_i^T))$ ; ensuite dans une quatrième sous-étape, déterminer la matrice de rotation à gauche $\hat{G}$; i.e. M23, à partir de la matrice $\hat{D}$ calculée dans la troisième sous-étape (238), à l'aide de l'équation :

$$\hat{G} = \pi\left(\Sigma_{i \geq 1}\left(\hat{U}_i \cdot \hat{D}^T \cdot \hat{K}_i^T\right)\right) ;$$

.- le système d'affichage tête haute porté comporte en outre un dispositif de positionnement Dp de l'aéronef ; et le procédé d'harmonisation duale comprend une quatrième étape de détermination de l'orientation M(pl/3) relative de la plateforme de l'aéronef par rapport au dispositif inertiel d'attitude D3, la quatrième étape de détermination de l'orientation relative M(pl/3) comportant un deuxième ensemble de sous étapes consistant à : dans une cinquième sous-étape, mettre la plateforme de l'aéronef à l'horizontale et calculer une matrice M(pl1/3) dont le gisement relatif est inconnu de compensation des angles de site et de roulis relatifs entre le dispositif inertiel d'attitude D3 et la plateforme telle que :

M(3/t)*M(pl1/3)= M(p/t), M(p/t) étant une matrice d'orientation relative théorique de la plateforme par rapport à la Terre ne comportant qu'une composante de gisement et pour laquelle l'angle de site et l'angle de roulis sont nuls, et M(3/t) étant une matrice d'orientation relative de la plateforme par rapport à la Terre mesurée par le dispositif inertielle d'attitude D3 ; puis dans une sixième sous-étape, déterminer le gisement d'un point remarquable dans le paysage, situé au loin devant et en vue de la caméra et dont on connait la latitude et la longitude, par rapport au dispositif inertiel d'attitude D3 en utilisant la caméra du dispositif inertiel augmenté D3p+, en prenant une photographie par la caméra 52 et transférant la photographie au calculateur d'harmonisation, puis en traitant la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertielle d'attitude, et de la connaissance de la matrice d'orientation M(pl/3) relative de la plateforme de l'aéronef par rapport au dispositif inertiel d'attitude D3 ; puis dans une septième sous-étape, déterminer le gisement du point remarquable par rapport à la plateforme à partir de la connaissance de la latitude et longitude du point remarquable, de la latitude et la longitude de la plateforme et de l'angle du cap de la plateforme fourni par un moyen de fourniture précis de la plateforme ; ensuite dans une huitième étape en déduire le gisement du dispositif inertiel d'attitude D3 par rapport à la plateforme, compléter la matrice M(pl1/3) pour obtenir la matrice M(pl/3) donnant l'orientation relative du dispositif inertiel d'attitude D3 par rapport à la plateforme de l'aéronef ; puis dans une neuvième sous-étape, déterminer l'orientation relative du deuxième élément fixe D2 du sous-système de détection de posture DDP par rapport à la plateforme (24) à partir de l'orientation relative M23 du deuxième élément fixe D2 du sous-système de détection de posture DDP par rapport au dispositif inertiel d'attitude D3, fournie par la troisième étape, et à partir de la matrice M(pl/3) donnant l'orientation relative du dispositif inertiel d'attitude D3 par rapport à la plateforme, fournie par septième sous-étape ;

.- la sixième sous-étape consiste à : amener la plateforme mise à l'horizontale sur une rose et positionner la plateforme de sorte qu'un point remarquable dans le paysage, situé au loin de la rose et dont on connait la latitude et la longitude, soit en vue de la caméra de l'équipement inertiel augmenté D3p+, prendre une photographie par la caméra et transférer la photographie au calculateur d'harmonisation ; puis traiter la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertielle d'attitude, et de la connaissance de la matrice d'orientation M(pl/3) relative de la plateforme de l'aéronef par rapport au dispositif inertiel d'attitude D3 ; et la septième sous-étape consiste à déterminer le gisement du point remarquable par rapport à la plateforme à partir de la connaissance de la latitude et longitude du point remarquable, de la latitude et la longitude de la plateforme et de l'angle du cap de la plateforme lu sur la rose.

L'invention a également pour objet un système d'affichage tête haute porté pour rendre conforme l'affichage d'informations de pilotage d'un aéronef sur un afficheur avec le monde réel extérieur, comprenant : un afficheur D0 de tête haute porté transparent ; un sous-système de détection de posture de tête DDP ayant un premier élément mobile de poursuite D1 attaché solidairement à l'afficheur transparent D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel d'attitude D3 de fourniture de l'attitude relative M3t de la plateforme par rapport à un repère terrestre lié à la Terre, amovible et apte à être fixé solidairement à la plateforme sur un pare-brise du cockpit pendant une durée d'opération de l'aéronef quelconque ; un sous-système d'harmonisation du système d'affichage tête haute porté pour rendre conforme l'affichage d'informations de pilotage sur l'afficheur D0 avec le monde réel extérieur, le sous-système d'harmonisation ayant un calculateur d'harmonisation duale et un Interface Homme Système pour gérer et réaliser la mise en œuvre du procédé d'harmonisation dual.

Le système d'affichage tête haute porté est caractérisé en ce que le sous-système d'harmonisation comprend également une caméra pour prendre une ou plusieurs photos du monde réel extérieur, et le dispositif inertiel d'attitude D3 de l'aéronef, et la caméra sont intégrés ensemble dans un équipement inertiel augmenté D3p+, l'équipement inertiel augmenté D3p+ étant déplaçable et apte à être fixé rapidement et facilement, et la caméra et le dispositif inertiel d'attitude D3 de l'aéronef étant solidairement liés.

Suivant des modes particuliers de réalisation, le système d'affichage tête haute porté comporte l'une ou plusieurs des caractéristiques suivantes, prises isolément ou en combinaison :

.- le sous-système d'harmonisation est configuré pour : dans une deuxième étape d'acquisitions de mesures $\hat{K}_I$, effectuer une série d'un nombre entier N, supérieur ou égal à 3, de visées Vi différentes , i variant de 1 à N, au travers de l'afficheur semi-transparent D0, en alignant avec le monde réel extérieur des images de rang i différentes, désignées par image(i), figées sur ledit afficheur D0, et représentant chacune une même photo, prise avant la première visée V1 par la caméra de l'équipement inertiel augmenté D3p+, vue avec une orientation angulaire différente Oi prédéterminée, exprimée en termes de trois angles d'Euler de gisement, site et roulis, correspondant à une matrice M(image(i)/0) du repère « image(i)de l'image de rang i vers le repère « 0 » de l'afficheur D0, et pour chaque visée Vi réalisée, i variant de 1 à N, mesurer et déterminer par le sous-système de détection de posture DDP l'orientation relative $\hat{K}_I$ correspondante du premier élément de poursuite D1 par rapport au deuxième élément fixe D2, lié à la plateforme de l'aéronef ; puis dans une troisième étape, calculer à l'aide du calculateur d'harmonisation la matrice d'orientation relative M01 entre l'afficheur D0 dans une position basculée et le premier élément de poursuite D1 et la matrice d'orientation relative M23 entre le deuxième élément fixe D2 du sous-système de détection de posture DDP et le dispositif inertiel d'attitude D3 comme respectivement la matrice droite $\hat{D}$ et la matrice gauche G solutions conjointes du système d'équations d'harmonisation duale : $\hat{U}_i = \hat{G} \cdot \hat{K}_i \cdot \hat{D}$, i variant de 1 à N, dans lequel $\hat{U}_I$ est la transposée de la matrice M(image(i)/0) ;

.- le minimum du nombre de mesures N requis dépend du nombre L de degrés de liberté angulaire des rotations M01 et M3t du système d'affichage HMD erronés ou inexploitables, ledit nombre L étant un entier supérieur ou égal à 1 et inférieur ou égal à 6, et le calculateur d'harmonisation est configuré pour résoudre le système d'équations $\hat{U}_i = G \cdot \hat{K}_i \cdot \hat{D}$, i variant de 1 à N, dans la troisième étape en utilisant un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - A sur l'ensemble des matrice de rotation 3 x3, pour déterminer la rotation à droite $\hat{D}$ et la rotation à gauche G ;

.- le nombre N est supérieur ou égal à 3, et la troisième étape de résolution du système d'équations d'harmonisation duale mise en œuvre par le calculateur d'harmonisation comprend un premier ensemble de sous-étapes consistant à : dans une première sous-étape, choisir une mesure "pivot" comme étant la première mesure parmi les N mesures et correspondant à i égal à 1, et pour i = 2, ⋯, N on calcule les matrices de rotations $\hat{U}_{1,i}$ et $\hat{K}_{1,i}$ à l'aide des équations : $\hat{U}_{1,i} = \hat{U}_1^\top \cdot \hat{U}_i$ et $\hat{K}_{1,i} = \hat{K}_1^\top \cdot \hat{K}_i$ ; puis dans une deuxième sous-étape, déterminer pour i = 2,⋯, N , les vecteurs unitaires principaux des rotations $\hat{U}_{1,i}$ et $\hat{K}_{1,i}$, désignés respectivement par $\vec{u}_i$ et $\vec{k}_i$ ; ensuite dans une troisième sous-étape, calculer la matrice droite $\hat{D}$ , i.e. M01, à l'aide de l'équation :

$$\widehat{D} = \pi \left( \sum_{i \geq 2} \left( \vec{k}_i \cdot \vec{u}_i^{\ T} \right) \right)$$

ensuite dans une quatrième sous-étape, déterminer la matrice de rotation à gauche $\hat{G}$; i.e. M23, à partir de la matrice $\hat{D}$ calculée dans la troisième sous-étape, à l'aide de l'équation : $G = \pi \left( \Sigma_{i \geq 1} (\hat{U}_i \cdot \hat{D}^T \cdot \hat{K}_i^T) \right)$ ;

.- le système d'affichage tête haute porté comporte en outre un dispositif de positionnement Dp de l'aéronef, et le calculateur d'harmonisation et l'Interface Homme Système du sous-système d'harmonisation sont configurés pour mettre en œuvre une quatrième étape de détermination de l'orientation M(pl/3) relative de la plateforme de l'aéronef par rapport au dispositif inertiel d'attitude D3, la quatrième étape de détermination de l'orientation relative M(pl/3) comprenant un deuxième ensemble de sous étapes consistant à : dans une cinquième sous-étape, mettre la plateforme de l'aéronef à l'horizontale et calculer une matrice M(pl1/3) dont le gisement relatif est inconnu de compensation des angles de site et de roulis relatifs entre le dispositif inertiel d'attitude D3 et la plateforme telle que : M(3/t)*M(pl1/3)= M(p/t), M(p/t) étant une matrice d'orientation relative théorique de la plateforme par rapport à la Terre ne comportant qu'une composante de gisement et pour laquelle l'angle de site et l'angle de roulis sont nuls, et M(3/t) étant une matrice d'orientation relative de la plateforme par rapport à la Terre mesurée par le dispositif inertielle d'attitude D3 ; puis dans une sixième sous-étape, déterminer le gisement d'un point remarquable dans le paysage, situé au loin devant et en vue de la caméra 52 et dont on connait la latitude et la longitude, par rapport au dispositif inertiel d'attitude D3 en utilisant la caméra du dispositif inertiel augmenté D3p+, en prenant une photographie par la caméra et transférant la photographie au calculateur d'harmonisation, puis en traitant la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertielle d'attitude, et de la connaissance de la matrice d'orientation M(pl/3) relative de la plateforme de l'aéronef par rapport au dispositif inertiel d'attitude D3 ; puis dans une septième sous-étape, déterminer le gisement du point remarquable par rapport à la plateforme à partir de la connaissance de la latitude et longitude du point remarquable, de la latitude et la longitude de la plateforme et de l'angle du cap de la plateforme fourni par un moyen de fourniture précis de la plateforme ; puis dans une huitième étape en déduire le gisement du dispositif inertiel d'attitude D3 par rapport à la plateforme, compléter la matrice M(pl1/3) pour obtenir la matrice M(pl/3) donnant l'orientation relative du dispositif inertiel d'attitude (30) D3 par rapport à la plateforme de l'aéronef ; puis dans une neuvième sous-étape, déterminer l'orientation relative du deuxième élément fixe D2 du sous-système de détection de posture DDP par rapport à la plateforme à partir de l'orientation relative M23 du deuxième élément fixe D2 du sous-système de détection de posture DDP par rapport au dispositif inertiel d'attitude D3, fournie par la troisième étape, et à partir de la matrice M(pl/3) donnant l'orientation relative du dispositif inertiel d'attitude D3 par rapport à la plateforme, fournie par septième sous-étape ;

.- la sixième sous-étape consiste à : amener la plateforme mise à l'horizontale sur une rose et positionner la plateforme de sorte qu'un point remarquable dans le paysage, situé au loin de la rose et dont on connait la latitude et la longitude, soit en vue de la caméra de l'équipement inertiel augmenté D3p+, prendre une photographie par la caméra et transférer la photographie au calculateur d'harmonisation, puis traiter la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertielle d'attitude, et de la connaissance de la matrice d'orientation M(pl/3) relative de la plateforme de l'aéronef par rapport au dispositif inertiel d'attitude D3 ; et la septième sous-étape consiste à déterminer le gisement du point remarquable par rapport à la plateforme à partir de la connaissance de la latitude et longitude du point remarquable, de la latitude et la longitude de la plateforme et de l'angle du cap de la plateforme lu sur la rose ;

.- l'équipement inertiel augmenté D3p+ comporte un dispositif de fixation de type ventouse.

L'invention sera mieux comprise à la lecture de la description de plusieurs formes de réalisation qui va suivre, donnée uniquement à titre d'exemple et faite en se référant aux dessins sur lesquels :

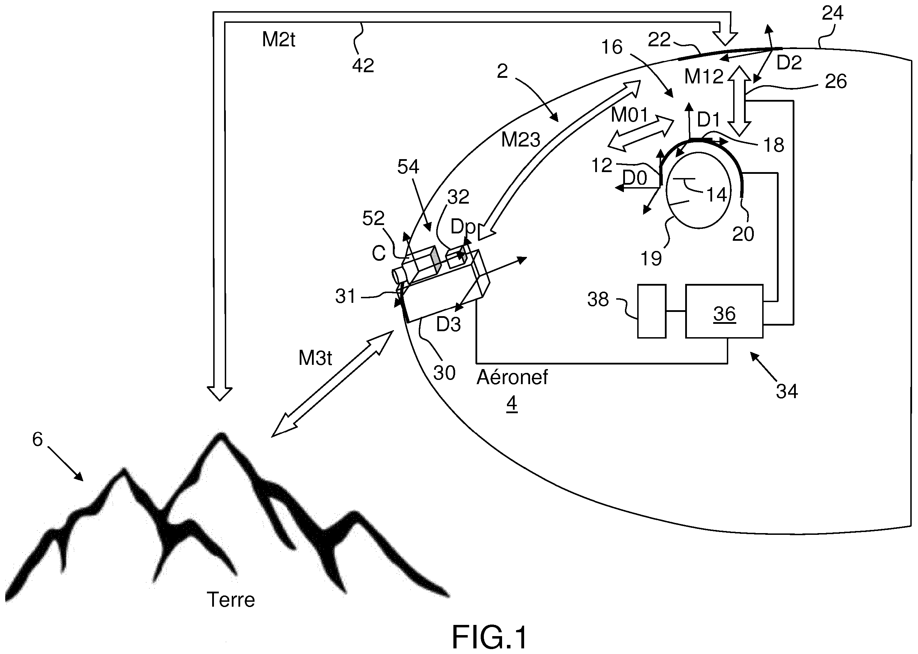

.- la Figure 1 est une vue d'un système d'affichage tête haute porté selon l'invention pour rendre conforme l'affichage d'informations de pilotage d'un aéronef sur un afficheur avec le monde réel extérieur dans lequel le dispositif inertiel d'attitude de l'aéronef est facilement déplaçable dans le cockpit dudit aéronef et requiert une nouvelle harmonisation du système d'affichage ;

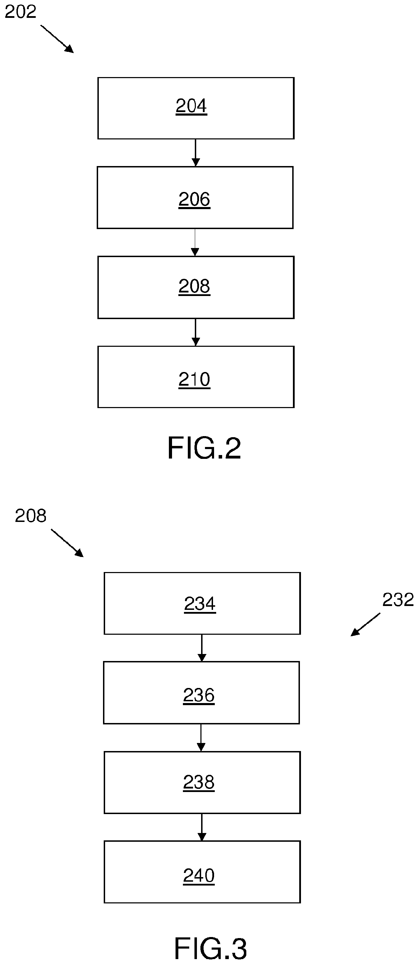

.- la Figure 2 est un ordinogramme d'un procédé d'harmonisation duale selon l'invention pour rendre conforme avec le monde réel extérieur l'affichage d'informations de pilotage d'un aéronef sur l'afficheur du système d'affichage tête haute porté de la Figure 1 ;

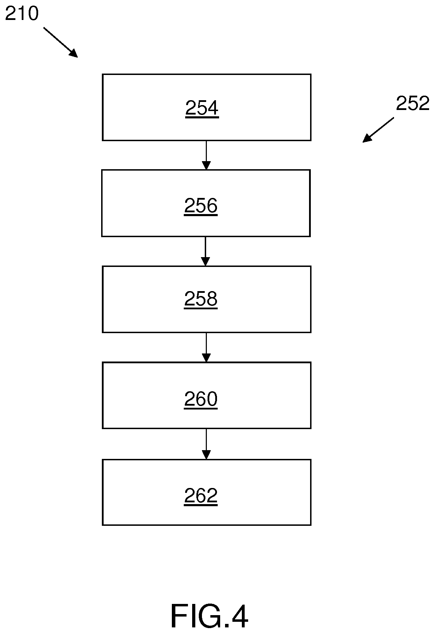

.- la Figure 3 est un ordinogramme détaillé de la troisième étape du procédé d'harmonisation duale conjointe de la Figure 2 ;
.- la Figure 4 est un ordinogramme détaillé de la quatrième étape du procédé d'harmonisation duale conjointe de la Figure 2.

Le principe de base du système d'affichage tête haute et du procédé d'harmonisation duale conjointe selon l'invention repose sur :

.- l'augmentation de l'équipement inertiel amovible, intégrant le dispositif inertiel d'attitude et le dispositif inertiel de positionnement de l'aéronef, par l'ajout d'une caméra dont l'axe optique est solidaire d'un des axes du dispositif inertiel d'attitude ;
.- l'utilisation de ladite caméra et du sous-système de détection de posture DDP du système d'affichage tête haute pour effectuer une série de visées Vi d'harmonisation duale ;
.- l'utilisation d'un algorithme de résolution conjointe de deux matrices gauche et droite, G et $\hat{D}$ , d'un système d'équations d'harmonisation duale.

Suivant la Figure 1, un système d'affichage tête haute 2 selon l'invention pour rendre conforme l'affichage d'informations de pilotage d'un aéronef 4 sur un afficheur avec le monde réel extérieur 6 comprend les dispositifs suivants :

.- un dispositif d'affichage ou afficheur 12 tête haute porte transparent, désigné par D0, positionné devant l'œil 14 d'un pilote et pouvant lui servir de viseur, par exemple une lentille ;
.- un sous-système 16 de détection de détection de posture DDP, ayant un premier élément mobile de poursuite 18, désigné par D1, attaché rigidement à la tête 19 ou au casque 20 du pilote et attaché rigidement à l'afficheur D0 lorsque l'afficheur D0 est mis dans le champ de vision du pilote, un deuxième élément fixe 22 D2, lié solidairement à la plateforme 24 (désignée également par « pl ») de l'aéronef 4 et servant de repère de référence vis-à-vis du sous-système 16 détection de posture DDP, et un moyen 26 de mesure et de détermination de l'orientation relative M12 du premier élément mobile de poursuite 18 D1 par rapport à un repère de référence du deuxième élément fixe 22 D2 lié à la plateforme,
.- un dispositif inertiel d'attitude 30 D3, par exemple une station inertielle AHRS, de fourniture de l'attitude relative M3t de la plateforme par rapport à un repère terrestre « t » lié à la Terre, amovible rapidement et apte à être fixé facilement et solidairement à la plateforme 24 dans le cockpit, par exemple sur un pare-brise du cockpit à l'aide d'un dispositif de fixation 31 de type ventouse, pendant une durée d'opération de l'aéronef quelconque,

.- un dispositif 32 Dp de fourniture de la position de l'aéronef par rapport au repère terrestre lié à la Terre, par exemple un système de positionnement par satellite de type GPS ou un système de radionavigation ;
.- un sous-système d'harmonisation 34 duale du système d'affichage tête haute 2 pour rendre conforme l'affichage d'informations de pilotage sur l'afficheur D0 avec le monde réel extérieur, le sous-système d'harmonisation ayant un calculateur d'harmonisation duale 36 et un Interface Homme Système 38 pour gérer et réaliser la mise en œuvre du procédé d'harmonisation duale.

Le calculateur d'harmonisation duale 36 peut être un calculateur électronique, dédié spécifiquement à la mise en œuvre du procédé d'harmonisation duale, ou un calculateur électronique à vocation plus générale que prévu pour mettre en œuvre également d'autres fonctions du système d'affichage tête haute 2.
De même, l'Interface Homme Système 38 peut être une interface Homme Système dédiée uniquement à la réalisation du procédé d'harmonisation duale ou une interface Homme Système plus générale réalisant de manière partagée d'autres fonctions du système d'affichage tête haute.
Le système d'affichage comporte également un moyen 42 pour définir, mesurer ou déterminer l'orientation angulaire relative M2t du deuxième élément fixe 22 D2 par rapport à la Terre.
Ce moyen 42 utilise les données du dispositif inertiel d'attitude D3, attaché à la plateforme de l'aéronef et configuré pour mesurer sa propre orientation M3t par rapport à la Terre, et l'orientation angulaire M23 relative du deuxième élément fixe 22 D2 fixe du sous-système 16 de détection de posture DDP par rapport au dispositif inertiel d'attitude D3, cette orientation relative M23 étant déterminée par le procédé d'harmonisation duale de la présente invention.
Les informations conformes de pilotage comprennent par exemple un vecteur vitesse, une cible au sol, une représentation synthétique du terrain ou encore d'une image d'un capteur électromagnétique, par exemple d'un capteur infrarouge.
Il est à remarquer que dans l'état de l'art actuel des systèmes d'affichage tête haute, le sous-système de détection de posture 16 DDP est relativement complexe en pratique car il met en œuvre deux mesures :

.- une mesure inertielle de l'orientation angulaire relative M2t du deuxième élément fixe D2 par rapport à la Terre, et

.- une mesure directe de l'orientation relative du premier élément mobile de poursuite D1 par rapport au deuxième élément fixe D2, souvent sous la forme d'un traitement d'images,

et utilise la connaissance de l'orientation relative M2t du deuxième élément fixe D2 par rapport à la Terre. Toutefois, si cette particularité rend les algorithmes plus complexes, cette particularité n'a pas d'impact sur le système d'affichage tête haute et le procédé d'harmonisation duale de la présente invention, et on pourra considérer par la suite que l'orientation relative M12 du premier élément de poursuite D1 par rapport au deuxième élément fixe D2 est simplement fourni par une mesure directe du sous-système de détection de posture DDP.

Ici et suivant un mode de réalisation préférée par la suite, le sous-système de détection de posture 16 DDP est configuré pour fournir des données brutes de sortie DDP issues prioritairement des mesures directes optiques de l'orientation relative entre le premier élément de poursuite D1 par rapport au deuxième élément fixe D2.

Par la suite, les moyens Mij permettant de connaitre l'orientation relative d'un repère « i » à un autre « j » sont assimilés dans la suite de ce document à la matrice décrivant cette orientation. En effet, l'orientation Mij d'un repère par rapport à un autre peut être décrite indifféremment par :

.- trois angles appelés angles d'Euler, qui conventionnellement en aéronautique, correspondant à l'ordre des rotations pour ces angles suivant :

.* Gisement : rotation autour de l'axe z qui est orienté vers le bas (ou vers la Terre) ;
.* Site : rotation autour de l'axe y qui est orienté vers la droite (ou vers l'est de la Terre) ;
.* Roulis : rotation autour de l'axe x qui est orienté vers l'avant (ou vers le nord de la Terre),

.- une matrice 3x3 décrivant cette rotation.

Par la suite, la matrice Mij pourra être notée également M(i/j), la matrice Mij ou M(i/j) décrivant l'orientation relative du repère « i » par rapport à « j » (ou de « i » vers « j »). Si vi est l'expression d'un vecteur dans le repère « i » et vj l'expression de ce vecteur dans le repère « j », alors on a la relation. Par conséquent on la relation : vi = M(i/j) * vj et la relation de passage entre repères : M(i/k) (de i vers k) = M(j/k) * M(i/j)

Le sous-système d'harmonisation duale 14 comprend également une caméra 52 pour prendre une ou plusieurs photos du monde réel extérieur.

Le dispositif inertiel d'attitude 30 D3 de l'aéronef, le dispositif de positionnement 32 Dp de l'aéronef et la caméra 52 sont intégrés ensemble et forment un équipement inertiel augmenté 54 D3p+.

Le dispositif inertiel d'attitude 30 D3 de l'aéronef et la caméra 52 sont liés solidairement de sorte que l'orientation relative de leurs repères associés est en permanence constante. En d'autres termes, la matrice de rotation de passage du repère attaché à la caméra 52 vers le repère attaché au dispositif inertiel d'attitude 30 D3 est invariante dans le temps. De manière particulière cette matrice de rotation est la matrice identité.

Le dispositif inertiel d'attitude 32 D3 et le dispositif de positionnement Dp de l'aéronef ne sont pas nécessairement liés solidairement.

En variante, le dispositif inertiel d'attitude D3 et le dispositif de positionnement Dp de l'aéronef peuvent ne pas être intégrés ensemble dans un équipement inertiel augmenté D3p+, seuls le dispositif inertiel d'attitude D3 et la caméra étant alors intégrés ensemble dans un même équipement inertiel augmenté D3+.

L'équipement inertiel augmenté 54 D3p+ ou D3p est déplaçable et apte à être fixé rapidement et facilement.

La caméra 52, le dispositif Dp de positionnement de l'aéronef, le dispositif inertiel d'attitude D3, et l'interface homme système 38 IHS sont connectés au calculateur d'harmonisation duale 36.

L'équipement inertiel augmenté 54 D3p+, forme ainsi un ensemble ou module amovible que l'on peut fixer sur le pare-brise du cockpit à l'aide du dispositif de fixation 31, par exemple, de type « ventouse », du dispositif inertiel d'attitude 30 D3.

L'utilisation d'une caméra 52, intégrée avec le dispositif inertiel d'attitude 30 D3 dans l'équipement inertiel augmenté 54 D3p+, et l'utilisation du premier mode de réalisation du procédé d'harmonisation duale conjointe d'une détection de posture DDP, décrit dans la demande de brevet intitulée « Procédé d'harmonisation duale d'un sous-système de détection de posture DDP intégré dans un système de visualisation tête haute porté» et déposée à la même date que la présente demande, permettent par une simple série d'un nombre N, supérieur ou égal à 3, de visées Vi sur le monde réel extérieur, correspondant à des images orientées suivant des orientations Oi d'une même photographie prise par la caméra, solidaire et supposée alignée lors d'une calibration fait en usine avec le dispositif inertiel d'attitude D3, de connaître précisément, rapidement et conjointement, l'orientation relative M23 du deuxième élément fixe D2 du sous-système de détection de posture DDP par rapport au dispositif inertiel d'attitude D3, et l'orientation relative M12 de l'afficheur D0 par rapport au premier élément de poursuite D1 du sous-système de détection de poursuite DDP.

Le sous-système d'harmonisation duale 34 est configuré pour mettre en œuvre le procédé d'harmonisation duale selon l'invention dans tous les modes de réalisation décrits ci-après.

Suivant la Figure 2, un procédé 202 d'harmonisation duale d'un système d'affichage tête haute porté pour rendre conforme l'affichage d'informations de pilotage sur un afficheur avec le monde réel extérieur comprend :

.- une première étape 204 de fourniture d'un équipement inertiel augmenté D3p+ intégrant solidairement dans un même ensemble le dispositif inertiel d'attitude D3 de l'aéronef, le dispositif de positionnement Dp de l'aéronef, et une caméra pour prendre une ou plusieurs photos du monde réel extérieur, la repère de la caméra étant supposé aligné sur le repère du dispositif inertiel d'attitude D3 de l'aéronef ;

.- une deuxième étape 206 d'acquisitions de mesures $\hat{K}_l$ dans laquelle une série d'un nombre entier N, supérieur ou égal à 3, de visées Vi différentes sont effectuées, i variant de 1 à N, effectuées au travers de l'afficheur semi-transparent D0, en alignant avec le monde réel extérieur des images de rang i différentes, désignées par image(i), figées sur ledit afficheur D0, et représentant chacune une même photo, prise avant la première visée V1 par la caméra de l'équipement inertiel augmenté D3p+, vue avec une orientation angulaire différente Oi prédéterminée, exprimée en termes de trois angles d'Euler de gisement, site et roulis, correspondant à une matrice M(image(i)/0) du repère « image(i)de l'image de rang i vers le repère « 0 » de l'afficheur D0, et dans laquelle pour chaque visée Vi réalisée, i variant de 1 à N, le sous-système de détection de posture DDP mesure et détermine l'orientation relative $\hat{K}_l$ correspondante du premier élément de poursuite D1 par rapport au deuxième élément fixe D2, lié à la plateforme de l'aéronef ; puis

.- une troisième étape 208 dans laquelle le calculateur d'harmonisation calcule la matrice d'orientation relative M01 entre l'afficheur D0 dans une position basculée et le premier élément de poursuite D1 et la matrice d'orientation relative M23 entre le deuxième élément fixe D2 du sous-système de détection de posture DDP et le dispositif inertiel d'attitude D3 comme respectivement la matrice droite $\hat{D}$ et la matrice gauche G solutions conjointes du système d'équations d'harmonisation :

$\hat{U}_i = \hat{G} \cdot \hat{K}_i \cdot \hat{D}$, i variant de 1 à N, dans lequel $\hat{U}_l$ est la transposée de la matrice M(image(i)/0) ; ensuite

.- puis une quatrième étape 210 optionnelle.

La première étape 204 est une étape préalable à la mise en œuvre du procédé d'harmonisation duale 202, effectuée une bonne fois pour toute.

Les deuxième et troisième étapes 206, 208 sont exécutées à chaque fois que l'équipement inertiel augmenté D3p+ est déplacé dans le cockpit et installé à nouveau.

Les deuxième et troisième étapes 206, 208 sont exécutées pour connaitre d'une part l'orientation relative M23 entre l'élément fixe D2 du sous-système de détection de posture DDP et l'équipement inertiel augmenté D3p+, et d'autre part l'orientation relative M01 de l'afficheur D0 par rapport au premier élément mobile de poursuite D1 du sous-système de détection de posture DDP.

Avantageusement, la durée des deuxième et troisième étapes, 206 et 208, exécutées successivement, est extrêmement courte et ne nuit pas à l'efficacité des opérations.

La quatrième étape 210 optionnelle n'est exécutée qu'une seule fois lors de l'installation du deuxième élément fixe D2 du sous-système de détection de posture qui reste attaché à la plateforme de l'aéronef, par exemple celle d'un hélicoptère. Cette quatrième étape 210 est exécutée pour connaitre l'orientation relative M2pl du deuxième élément fixe D2 du sous-système de détection de posture par rapport à la plateforme. Avantageusement, cette quatrième étape est relativement courte et rend l'installation du système d'affichage tête haute sur la plateforme très efficace.

Ainsi, lorsque la plateforme est mise en service, le module D3p+ peut être déplacé et replacé en toute liberté.

Au cours de la deuxième étape 206, une fois l'équipement inertiel augmenté D3p+ fixé sur la plateforme de l'aéronef, dans une position permettant à la caméra de voir le paysage, de préférence vers l'avant du cockpit mais pas nécessairement, une photographie du paysage, i.e. du monde réel extérieur, est prise par la caméra.

Puis au cours de la même deuxième étape 206, pour i variant de 1 à N, N étant un entier supérieur ou égal à 3, le calculateur d'harmonisation duale affiche sur l'afficheur D0 une image figée de rang i, désignée par image(i) représentant la photo prise vue avec une orientation angulaire Oi prédéterminée, caractérisée par trois angles d'Euler, de gisement, site, roulis, désignés respectivement par Gisement(Oi), Site(Oi), Roulis(Oi), et correspondant à une matrice de transformation du M(image(i)/0) du repère « image(i) » de l'image de rang i vers le repère « 0 » de l'afficheur D0. Par une visée Vi correspondante, l'opérateur aligne l'image de rang i, image(i), vue dans l'afficheur D0 sur le paysage correspondant du monde réel extérieur vu à travers l'afficheur D0, et une fois l'alignement réalisé l'opérateur presse un bouton de l'IHS commandant au calculateur d'harmonisation d'enregistrer l'orientation correspondante, Vi ou lm $\hat{K}_l$, du premier élément mobile de poursuite D2 par rapport au deuxième élément fixe D2, mesurée par le sous-système détection de posture DDP.

Pour chaque i variant de 1 à N, lorsque l'opérateur « aligne » l'image perçue image(i) dans l'afficheur D0 sur le paysage réel extérieur, cela revient à donner à l'image la même orientation que la caméra. La matrice de passage du repère « image(i) » de l'image de rang i au repère « c » de la caméra, désignée par M(image(i)/c), est à ce moment là égale à la matrice identité.

Comme cela a été indiqué précédemment, nous considérons la caméra orientée de façon identique au dispositif inertiel d'attitude D3 de l'équipement inertiel augmenté D3p+. Pour chaque i, i variant de 1 à N, les équations matricielles suivantes sont satisfaites :

$$M(i/c) = M(i/3) = Id3 = M(0/3)_i * M(i/0) \text{ avec } M(i/0) \text{ connue.}$$

Ainsi pour chaque i, i variant de 1 à N, l'orientation relative de l'afficheur D0 par rapport au dispositif inertiel d'attitude D3p , désignée par la matrice de rotation $M(0/3)_i$, peut être déterminée suivant la relation :

$$M(0/3)_i = \text{transposée}[M(i/0)].$$

Ainsi l'équation : $M(0/3)_i = M(2/3) * M(1/2)_i * M(0/1)$ est une équation d'harmonisation duale dans laquelle $M(0/3)_i$ est connue pour chaque direction d'orientation Oi, i variant de 1 à N, et $M(1/2)_i$ , c'est à dire $\hat{K}_l$ est déterminée par la direction de visée Vi correspondante.

On dispose alors d'une série de quatre orientations connues O0, O1, 02, 03 de l'afficheur D0 par rapport au dispositif D3 de fourniture de l'attitude de l'aéronef et de quatre visées mesurées correspondantes V0, V1, V2, V3.

Les conditions de résolution d'un problème d'harmonisation duale sont remplies comme décrites dans la demande de brevet intitulée « Procédé d'harmonisation duale d'un sous-système de détection de posture DDP intégré dans un système de visualisation tête haute porté » et déposée à la même date que la présente demande.

Ici, la matrice M(2/3) correspond à la matrice de correction G à gauche et la matrice M(0/1) correspond à la matrice de correction $\hat{D}$ à droite.

Le procédé d'harmonisation duale permet simplement par calcul d'aligner entre eux l'ensemble des dispositifs du système d'affichage 2 en mettant en œuvre la troisième étape 208.

Le minimum du nombre de mesures N requis dépend du nombre L de degrés de liberté angulaire des rotations M01 et M3t du système d'affichage HMD erronés ou inexploitables, ledit nombre étant un entier supérieur ou égal à 1 et inférieur ou égal à 6.

La résolution du système d'équations $\hat{U}_i = G \cdot \hat{K}_i \cdot \hat{D}$ , i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la rotation à droite $\hat{D}$ et la rotation à gauche G .

Suivant la Figure 3, on suppose que nombre de degrés de liberté angulaire L des rotations M01 et M3t est compris entre 1 et 6, et le nombre N totale de mesures est supérieur ou égal à 3,

La troisième étape 208 de résolution du système d'équations d'harmonisation duale comprend un premier ensemble 232 de sous étapes consistant à :

.- dans une première sous-étape 234, choisir une mesure "pivot" comme étant la première mesure parmi les N mesures et correspondant à i égal à 1, et pour i = 2, ⋯, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis

.- dans une deuxième sous-étape 236, déterminer pour i = 2, ⋯ , N , les vecteurs unitaires principaux des rotations $\hat{U}_{1,i}$ et $\hat{K}_{1,i}$, désignés respectivement par $\vec{u}_i$ et $\vec{k}_i$ ; ensuite

.- dans une troisième sous-étape 238, calculer la matrice droite $\hat{D}$ , i.e. M01, à l'aide de l'équation :

$$\hat{D} = \pi\left(\sum_{i\geq 2}\left(\vec{k}_i \cdot \vec{u}_i^{\ T}\right)\right)$$

ensuite

.- dans une quatrième sous-étape 240, déterminer la matrice de rotation à gauche $\hat{G}$ ; i.e. M23, à partir de la matrice $\hat{D}$ calculée dans la troisième sous-étape 318, à l'aide de l'équation :

$$\widehat{G} = \pi\left(\sum_{i\geq 1}\left(\widehat{U}_i \cdot \widehat{D}^T \cdot \widehat{K}_i^{\,T}\right)\right)$$

Les deuxième et troisième étapes 206 et 208 ne permettent pas à elle seule jusque-là de connaitre l'orientation relative de la plateforme par rapport au dispositif inertiel D3 de l'équipement inertiel augmenté D3p+. L'équipement inertiel augmenté D3p+ ne permet donc pas à ce stade d'afficher dans l'afficheur D0 des informations relatives à l'attitude de la plateforme en termes de cap, site, roulis (en anglais et respectivement « heading », « pitch », « roll »).

A cette fin, la quatrième étape 210 peut être mise en œuvre pourvu que l'orientation relative M2pl du deuxième élément fixe D2 par rapport à la plateforme soit fixe en fonction du temps, ce qui est généralement le cas.

Cette quatrième étape 210 a le grand avantage de ne pas nécessiter de moyens spécifiques au système d'affichage tête haute pour réaliser l'harmonisation du dispositif inertiel d'attitude D3.

Cette quatrième étape 210 a également l'avantage de ne pas nécessiter un dispositif inertiel d'attitude D3 très performant dans la mesure où ses données de cap ne sont pas utilisées pendant cette quatrième étape 210 d'harmonisation du dispositif inertiel d'attitude D3. Ces données de cap sont en effet souvent non précises en absence de mouvement de la plateforme.

La quatrième étape 210 de détermination de l'orientation relative M(pl/3) de la plateforme de l'aéronef par rapport au dispositif inertiel d'attitude D3 comprend un deuxième ensemble 252.

Dans une cinquième sous-étape 254, la plateforme de l'aéronef est mise à l'horizontale. Pour cela la plateforme dispose d'une zone de niveau sur laquelle le niveau peut être relevé. Une matrice M(pl1/3) dont le gisement relatif est inconnu de compensation des angles de site et de roulis relatifs entre le dispositif inertiel d'attitude D3 et la plateforme est calculée telle que : M(3/t)*M(pl1/3)= M(p/t), M(p/t) étant une matrice d'orientation relative théorique de la plateforme par rapport à la Terre ne comportant qu'une composante de gisement et pour laquelle l'angle de site et l'angle de roulis sont nuls, et M(3/t) est une matrice d'orientation relative de la plateforme par rapport à la Terre mesurée par le dispositif inertielle d'attitude D3.

Puis dans une sixième sous-étape 256, le gisement d'un point remarquable dans le paysage, situé au loin devant la caméra 52 et dont on connait la latitude et la longitude, par rapport au dispositif inertiel 30 D3, est déterminé en utilisant la caméra 52.

La sixième sous-étape 256 consiste à :

.- prendre une photographie par la caméra 52 et transférer la photographie au calculateur d'harmonisation, puis
.- traiter la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertielle d'attitude, et de la connaissance de la matrice d'orientation M(pl/3) relative de la plateforme de l'aéronef par rapport au dispositif inertiel d'attitude D3.

Ensuite, dans une septième sous-étape 258, le gisement du point remarquable par rapport à la plateforme est déterminé à partir de la connaissance de la latitude et longitude du point remarquable, de la latitude et la longitude de la plateforme, et de l'angle du cap de la plateforme fourni par un moyen de fourniture précis du cap de la plateforme, disponible au moment de la mise en œuvre de la quatrième étape 210.

Ensuite dans une huitième sous-étape 260, il en est déduit le gisement du dispositif inertiel d'attitude D3 par rapport à la plateforme et la matrice M(pl1/3) est complétée pour obtenir la matrice M(pl/3) donnant l'orientation relative du dispositif inertiel d'attitude D3 par rapport à la plateforme de l'aéronef.

Puis dans une neuvième sous-étape 262, l'orientation relative du deuxième élément fixe D2 du sous-système de détection de posture DDP par rapport à la plateforme est déterminée à partir de l'orientation relative M23 du deuxième élément fixe D2 du sous-système de détection de posture DDP par rapport au dispositif inertiel d'attitude D3, fournie par la troisième étape 208, et à partir de la matrice M(pl/3) donnant l'orientation relative du dispositif inertiel d'attitude D3 par rapport à la plateforme, fournie par septième sous-étape 258.

Suivant un mode de réalisation particulier, dans la sixième sous-étape 256 la plateforme est amenée, mise à l'horizontale, sur une rose disponible en général sur un terrain d'aviation, et la plateforme est positionnée de sorte qu'un point remarquable dans le paysage, situé au loin de la rose et dont on connait la latitude et la longitude, soit en vue de la caméra 52 de l'équipement inertiel augmenté D3p+.

Suivant le même mode de réalisation, dans la septième étape 258 l'angle du cap de la plateforme est fourni par la lecture de la rose.

Cette connaissance de l'orientation relative M2pl du deuxième élément fixe D2 par rapport à la plateforme permet alors d'enlever l'équipement inertiel augmenté D3p+ et de le repositionner à volonté. Il suffit de réaliser les deuxième et troisième étapes 206, 208 décrites ci-dessus pour obtenir toutes les orientations relatives des équipements formant le système d'affichage en tête haute 2 et d'utiliser pleinement le système d'affichage tête haute.

Le système d'affichage tête haute et le procédé d'harmonisation duale permet d'utiliser un système d'affichage tête haute ayant un dispositif inertiel d'attitude facilement déplaçable et repositionnable.

L'ajout d'une caméra solidaire au dispositif inertiel d'attitude D3 pour former un équipement inertiel augmenté D3p+ intégré et l'utilisation d'un algorithme d'harmonisation duale permet de réaliser rapidement et précisément les harmonisations nécessaires de l'ensemble des éléments du système d'affichage tête haute et permet une utilisation efficace dudit système d'affichage tête haute.

Avantageusement, le procédé d'harmonisation selon l'invention peut être réalisée en un temps très court, typiquement une minute, ce qui n'impacte pas la valeur opérationnelle du système d'affichage tête haute.

Le procédé d'harmonisation duale selon l'invention permet également d'harmoniser le dispositif inertiel d'attitude D3 sur la plateforme et d'afficher dans le système d'affichage tête haute les informations d'attitude de la plateforme.

Le procédé d'harmonisation duale des éléments constitutifs du système d'affichage tête haute est un procédé simple, réalisable en un minimum de trois visées, qui n'utilise aucun moyen externe au système installé.

## Revendications

1. Procédé d'harmonisation duale d'un système d'affichage tête haute porté (2) pour rendre conforme l'affichage d'informations de pilotage d'un aéronef sur un afficheur avec le monde réel extérieur,

   le système d'affichage tête haute porté comprenant

   .- un afficheur (12) D0 de tête haute porté transparent,
   .- un sous-système de détection de posture de tête DDP (16) ayant un premier élément mobile de poursuite (18) D1 attaché solidairement à l'afficheur transparent D0, un deuxième élément fixe (22) D2 lié solidairement à la plateforme (24) de l'aéronef, et un moyen de mesure et de détermination de l'orientation relative M12 du premier élément mobile de poursuite D1 par rapport à un repère de référence du deuxième élément fixe D2 lié à la plateforme (24),
   .- un dispositif inertiel d'attitude (30) D3 de fourniture de l'attitude relative M3t de la plateforme (24) par rapport à un repère terrestre lié à la Terre, amovible et apte à être fixé solidairement à la plateforme (24) sur un pare-brise du cockpit pendant une durée d'opération de l'aéronef quelconque,
   .- un sous-système d'harmonisation (34) du système d'affichage tête haute porté pour rendre conforme l'affichage d'informations de pilotage sur l'afficheur D0 avec le monde réel extérieur, le sous-système d'harmonisation ayant un calculateur d'harmonisation (36) et un Interface Homme Système (38) pour gérer et réaliser la mise en œuvre du procédé d'harmonisation duale,

   le procédé d'harmonisation duale étant **caractérisé en ce qu'**il comprend :

   .- une première étape (204) de fourniture d'un équipement inertiel augmenté D3p+ intégrant solidairement dans un même ensemble le dispositif inertiel d'attitude D3 de l'aéronef, et une caméra pour prendre une ou plusieurs photos du monde réel extérieur, la caméra et le dispositif inertiel d'attitude D3 de l'aéronef étant solidairement liés ;
   .- une deuxième étape (206) d'acquisitions de mesures $\hat{K}_l$ dans laquelle une série d'un nombre entier N, supérieur ou égal à 3, de visées Vi différentes sont effectuées, i variant de 1 à N, effectuées au travers de l'afficheur semi-transparent D0, en alignant avec le monde réel extérieur des images de rang i différentes, désignées par image(i), figées sur ledit afficheur D0, et représentant chacune une même photo, prise avant la première visée V1 par la caméra de l'équipement inertiel augmenté D3p+, vue avec une orientation angulaire différente Oi prédéterminée, exprimée en termes de trois angles d'Euler de gisement, site et roulis, correspondant à une matrice M(image(i)/0) du repère « image(i) » de l'image de rang i vers le repère « 0 » de l'afficheur D0, et dans laquelle pour chaque visée Vi réalisée, i variant de 1 à N, le sous-système de détection de posture DDP mesure et détermine l'orientation relative $\hat{K}_l$ correspondante du premier élément de poursuite D1 par rapport au deuxième élément fixe D2, lié à la plateforme de l'aéronef ; puis
   .- une troisième étape (208) dans laquelle le calculateur d'harmonisation duale calcule conjointement la matrice d'orientation relative M01 entre l'afficheur D0 dans une position basculée et le premier élément de poursuite D1 et la matrice d'orientation relative M23 entre le deuxième élément fixe D2 du sous-système de détection de posture (16) DDP et le dispositif inertiel d'attitude (30) D3 comme respectivement la matrice droite $\hat{D}$ et la matrice gauche $\hat{G}$ solutions conjointes du système d'équations d'harmonisation : $\hat{U}_i = \hat{G} \cdot \hat{K}_i \cdot \hat{D}$, i variant de 1 à N, dans lequel $\hat{U}_l$ est la transposée de la matrice M(image(i)/0).

**2.** Procédé d'harmonisation duale d'un système d'affichage tête haute porté selon la revendication 1, dans lequel

le minimum du nombre de mesures N requis dépend du nombre L de degrés de liberté angulaire des rotations M01 et M3t du système d'affichage HMD erronées ou inexploitables, ledit nombre L étant un entier supérieur ou égal à 1 et inférieur ou égal à 6, et

la résolution du système d'équations $\hat{U}_i = \hat{G} \cdot \hat{K}_i \cdot \hat{D}$ , i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la rotation à droite $\hat{D}$ et la rotation à gauche $\hat{G}$ .

**3.** Procédé d'harmonisation duale d'un système d'affichage tête haute porté selon la revendication 2, dans lequel

le nombre N est supérieur ou égal à 3, et

la troisième étape (208) de résolution du système d'équations d'harmonisation duale comprend un premier ensemble (232) de sous étapes consistant à :

.- dans une première sous-étape (234), choisir une mesure "pivot" comme étant la première mesure parmi les N mesures et correspondant à i égal à 1, et pour i = 2, ···, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis

.- dans une deuxième sous-étape (236), déterminer pour i = 2, ···, N , les vecteurs unitaires principaux des rotations $\hat{U}_{1,i}$ et $\hat{K}_{1,i}$, désignés respectivement par $\vec{u}_i$ et $\vec{k}_i$ ; ensuite

.- dans une troisième sous-étape (238), calculer la matrice droite $\hat{D}$ , i.e. M01, à l'aide de l'équation :

$$\widehat{D} = \pi\left(\sum_{i>2}\left(\vec{k}_i \cdot \vec{u}_i^{\,T}\right)\right)$$

ensuite

.- dans une quatrième sous-étape (240), déterminer la matrice de rotation à gauche $\hat{G}$ ; i.e. M23, à partir de la matrice $\hat{D}$ calculée dans la troisième sous-étape (238), à l'aide de l'équation :

$$\widehat{G} = \pi\left(\sum_{i>1}\left(\widehat{U}_i \cdot \widehat{D}^T \cdot \widehat{K}_i^{\,T}\right)\right)$$

**4.** Procédé d'harmonisation duale d'un système d'affichage tête haute selon l'une quelconque des revendications 1 à 3, dans lequel le système d'affichage tête haute porté comporte en outre un dispositif de positionnement Dp de l'aéronef ; et

comprenant une quatrième étape (210) de détermination de l'orientation M(pl/3) relative de la plateforme de l'aéronef par rapport au dispositif inertiel d'attitude D3,

la quatrième étape (210) de détermination de l'orientation relative M(pl/3) comportant un deuxième ensemble (252) de sous étapes consistant à :

.- dans une cinquième sous-étape (254), mettre la plateforme de l'aéronef à l'horizontale et calculer une matrice M(pl1/3) dont le gisement relatif est inconnu de compensation des angles de site et de roulis relatifs entre le dispositif inertiel d'attitude D3 et la plateforme telle que : M(3/t)*M(pl1/3)= M(p/t),

M(p/t) étant une matrice d'orientation relative théorique de la plateforme par rapport à la Terre ne comportant qu'une composante de gisement et pour laquelle l'angle de site et l'angle de roulis sont nuls, et

M(3/t) étant une matrice d'orientation relative de la plateforme par rapport à la Terre mesurée par le dispositif inertiel d'attitude D3 ; puis

.- dans une sixième sous-étape (256), déterminer le gisement d'un point remarquable dans le paysage, situé au loin devant et en vue de la caméra (52) et dont on connait la latitude et la longitude, par rapport au dispositif inertiel d'attitude D3 en utilisant la caméra du dispositif inertiel augmenté D3p+,

.* en prenant une photographie par la caméra (52) et transférant la photographie au calculateur d'harmonisation, puis

.* en traitant la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertiel d'attitude, et de la connaissance de la matrice d'orientation M(pl/3) relative de la plateforme de l'aéronef par rapport au dispositif inertiel d'attitude D3 ; puis

.- dans une septième sous-étape (258), déterminer le gisement du point remarquable par rapport à la plateforme à partir de la connaissance de la latitude et longitude du point remarquable, de la latitude et la longitude de la plateforme et de l'angle du cap de la plateforme fourni par un moyen de fourniture précis du cap de la plateforme ; ensuite

.- dans une huitième étape (260) en déduire le gisement du dispositif inertiel d'attitude D3 par rapport à la plateforme, compléter la matrice M(pl1/3) pour obtenir la matrice M(pl/3) donnant l'orientation relative du dispositif inertiel d'attitude D3 par rapport à la plateforme de l'aéronef ; puis

.- dans une neuvième sous-étape (262),déterminer l'orientation relative du deuxième élément fixe D2 du sous-système de détection de posture DDP par rapport à la plateforme (24) à partir de l'orientation relative M23 du deuxième élément fixe D2 du sous-système de détection de posture DDP par rapport au dispositif inertiel d'attitude D3, fournie par la troisième étape (208), et à partir de la matrice M(pl/3) donnant l'orientation relative du dispositif inertiel d'attitude D3 par rapport à la plateforme, fournie par septième sous-étape(258).

5. Procédé d'harmonisation duale d'un système d'affichage tête haute porté selon la revendication 4, dans lequel la sixième sous-étape (256) consiste à :

.- amener la plateforme (24) mise à l'horizontale sur une rose et positionner la plateforme (24) de sorte qu'un point remarquable dans le paysage, situé au loin de la rose et dont on connait la latitude et la longitude, soit en vue de la caméra de l'équipement inertiel augmenté D3p+, prendre une photographie par la caméra (52) et transférer la photographie au calculateur d'harmonisation (36), puis

.- traiter la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertiel d'attitude et de la connaissance de la matrice d'orientation M(pl/3) relative de la plateforme de l'aéronef par rapport au dispositif inertiel d'attitude D3 ; et

la septième sous-étape (258) consiste à déterminer le gisement du point remarquable par rapport à la plateforme à partir de la connaissance de la latitude et longitude du point remarquable, de la latitude et la longitude de la plateforme et de l'angle du cap de la plateforme (24) lu sur la rose.

6. Système d' affichage tête haute porté pour rendre conforme l'affichage d'informations de pilotage d'un aéronef sur un afficheur avec le monde réel extérieur, comprenant

.- un afficheur (12) D0 de tête haute porté transparent,

.- un sous-système de détection de posture de tête DDP (16) ayant un premier élément mobile de poursuite (18) D1 attaché solidairement à l'afficheur transparent D0, un deuxième élément fixe (22) D2 lié solidairement à la plateforme (24) de l'aéronef (4), et un moyen (26) de mesure et de détermination de l'orientation relative M12 du premier élément mobile de poursuite (18) D1 par rapport à un repère de référence du deuxième élément fixe (22) D2 lié à la plateforme (24),

.- un dispositif inertiel d'attitude (30) D3 de fourniture de l'attitude relative M3t de la plateforme (24) par rapport à un repère terrestre lié à la Terre, amovible et apte à être fixé solidairement à la plateforme sur un pare-brise du cockpit pendant une durée d'opération de l'aéronef (4) quelconque,

.- un sous-système d'harmonisation duale (34) du système d'affichage tête haute porté pour rendre conforme l'affichage d'informations de pilotage sur l'afficheur D0 avec le monde réel extérieur, le sous-système d'harmonisation duale (34) ayant un calculateur d'harmonisation duale (36) et un Interface Homme Système (38) pour gérer et réaliser la mise en œuvre du procédé d'harmonisation duale,

le système d'affichage tête haute porté étant **caractérisé en ce que** :

.- le sous-système d'harmonisation duale (34) comprend également une caméra (52) pour prendre une ou plusieurs photos du monde réel extérieur, et le dispositif inertiel d'attitude (30) D3 de l'aéronef, et la caméra (52) sont intégrés ensemble dans un équipement inertiel augmenté (54) D3p+, l'équipement inertiel augmenté (54) D3p+ étant déplaçable et apte à être fixé rapidement et facilement, et la caméra (52) et le dispositif inertiel d'attitude (30) D3 de l'aéronef étant solidairement liés ;

dans lequel le sous-système d'harmonisation duale (34) est configuré pour :

.- dans une deuxième étape (206) d'acquisitions de mesures $\hat{K}_l$, effectuer une série d'un nombre entier N, supérieur ou égal à 3, de visées Vi différentes , i variant de 1 à N, au travers de l'afficheur semi-transparent D0, en alignant avec le monde réel extérieur des images de rang i différentes, désignées par image(i), figées sur ledit afficheur D0, et représentant chacune une même photo, prise avant la première visée V1 par la caméra (52) de l'équipement inertiel augmenté (54) D3p+, vue avec une orientation angulaire différente Oi prédéterminée, exprimée en termes de trois angles d'Euler de gisement, site et roulis, correspondant à une matrice M(image(i)/0) du repère « image(i) »de l'image de rang i vers le repère « 0 » de l'afficheur D0, et pour chaque visée Vi réalisée, i variant de 1 à N, mesurer et déterminer par le sous-système de détection de posture DDP l'orientation relative $\hat{K}_l$ correspondante du premier élément de poursuite D1 par rapport au deuxième élément fixe D2, lié à la plateforme de l'aéronef ; puis
.- dans une troisième étape (208), calculer à l'aide du calculateur d'harmonisation duale la matrice d'orientation relative M01 entre l'afficheur D0 dans une position basculée et le premier élément de poursuite D1 et la matrice d'orientation relative M23 entre le deuxième élément fixe D2 du sous-système de détection de posture DDP et le dispositif inertiel d'attitude (30) D3 comme respectivement la matrice droite $\hat{D}$ et la matrice gauche $\hat{G}$ solutions conjointes du système d'équations d'harmonisation duale : $\hat{U}_i = \hat{G} \cdot \hat{K}_i \cdot \hat{D}$ , i variant de 1 à N, dans lequel $\hat{U}_i$ est la transposée de la matrice M(image(i)/0).

7. Système d' affichage tête haute porté pour rendre conforme l'affichage d'informations de pilotage d'un aéronef sur un afficheur avec le monde réel extérieur selon la revendication 6, dans lequel :

le minimum du nombre de mesures N requis dépend du nombre L de degrés de liberté angulaire des rotations M01 et M3t du système d'affichage HMD erronées ou inexploitables, ledit nombre L étant un entier supérieur ou égal à 1 et inférieur ou égal à 6, et
le calculateur d'harmonisation duale (36) est configuré pour résoudre le système d'équations $\hat{U}_i = \hat{G} \cdot \hat{K}_i \cdot \hat{D}$ , i variant de 1 à N, dans la troisième étape en utilisant un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A) - A$ sur l'ensemble des matrice de rotation 3 x3, pour déterminer la rotation à droite $\hat{D}$ et la rotation à gauche $\hat{G}$ .

8. Système d' affichage tête haute porté pour rendre conforme l'affichage d'informations de pilotage d'un aéronef sur un afficheur avec le monde réel extérieur selon la revendication 6, dans lequel :

le nombre N est supérieur ou égal à 3, et
la troisième étape (208) de résolution du système d'équations d'harmonisation duale mise en œuvre par le calculateur d'harmonisation (36) comprend un premier ensemble (232) de sous étapes consistant à :

.- dans une première sous-étape (234), choisir une mesure "pivot" comme étant la première mesure parmi les N mesures et correspondant à i égal à 1, et pour i = 2, ⋯, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis
.- dans une deuxième sous-étape (236), déterminer pour i = 2, ⋯, N , les vecteurs unitaires principaux des rotations $\hat{U}_{1,i}$ et $\hat{K}_{1,i}$, désignés respectivement par $\vec{u}_i$ et $\vec{k}_i$ ; ensuite
.- dans une troisième sous-étape (238), calculer la matrice droite $\hat{D}$ , i.e. M01, à l'aide de l'éuation :

$$\widehat{D} = \pi \left( \sum_{i>2} \left( \vec{k}_i \cdot \vec{u}_i^T \right) \right)$$

ensuite
.- dans une quatrième sous-étape (240), déterminer la matrice de rotation à gauche $\hat{G}$ ; i.e. M23, à partir

de la matrice $\hat{D}$ calculée dans la troisième sous-étape (318), à l'aide de l'équation :

$$\hat{G} = \pi\left(\sum_{i\geq1}\left(\hat{U}_i \cdot \hat{D}^T \cdot \hat{K}_i^{\ T}\right)\right)$$

9. Système d' affichage tête haute porté pour rendre conforme l'affichage d'informations de pilotage d'un aéronef sur un afficheur avec le monde réel extérieur selon la revendication 8,

comportant en outre un dispositif de positionnement Dp (32) de l'aéronef, et
dans lequel le calculateur d'harmonisation duale (36) et l'Interface Homme Système (38) du sous-système d'harmonisation (34) sont configurés pour mettre en œuvre une quatrième étape (210) de détermination de l'orientation M(pl/3) relative de la plateforme de l'aéronef par rapport au dispositif inertiel d'attitude D3,
la quatrième étape (210) de détermination de l'orientation relative M(pl/3) comprenant un deuxième ensemble (252) de sous étapes consistant à :

.- dans une cinquième sous-étape (254), mettre la plateforme de l'aéronef à l'horizontale et calculer une matrice M(pl1/3) dont le gisement relatif est inconnu de compensation des angles de site et de roulis relatifs entre le dispositif inertiel d'attitude D3 et la plateforme telle que : M(3/t)*M(pl1/3)= M(p/t),
M(p/t) étant une matrice d'orientation relative théorique de la plateforme par rapport à la Terre ne comportant qu'une composante de gisement et pour laquelle l'angle de site et l'angle de roulis sont nuls, et
M(3/t) est une matrice d'orientation relative de la plateforme par rapport à la Terre mesurée par le dispositif inertiel d'attitude D3 ; puis

.- dans une sixième sous-étape (256), déterminer le gisement d'un point remarquable dans le paysage, situé au loin devant et en vue de la caméra (52) et dont on connait la latitude et la longitude, par rapport au dispositif inertiel d'attitude D3 en utilisant la caméra (52) du dispositif inertiel augmenté D3p+,

.* en prenant une photographie par la caméra (52) et transférant la photographie au calculateur d'harmonisation, puis
.* en traitant la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertiel d'attitude, et de la connaissance de la matrice d'orientation M(pl/3) relative de la plateforme (24) de l'aéronef (4) par rapport au dispositif inertiel d'attitude D3 ; puis

.- dans une septième sous-étape (258), déterminer le gisement du point remarquable par rapport à la plateforme (24) à partir de la connaissance de la latitude et longitude du point remarquable, de la latitude et la longitude de la plateforme (24) et de l'angle du cap de la plateforme fourni par un moyen de fourniture précis du cap de la plateforme ; puis
.- dans une huitième étape (260) en déduire le gisement du dispositif inertiel d'attitude D3 par rapport à la plateforme, compléter la matrice M(pl1/3) pour obtenir la matrice M(pl/3) donnant l'orientation relative du dispositif inertiel d'attitude (30) D3 par rapport à la plateforme de l'aéronef ; puis
.- dans une neuvième sous-étape (262), déterminer l'orientation relative du deuxième élément fixe D2 du sous-système de détection de posture DDP par rapport à la plateforme à partir de l'orientation relative M23 du deuxième élément fixe D2 du sous-système de détection de posture DDP (16) par rapport au dispositif inertiel d'attitude D3, fournie par la troisième étape (208), et à partir de la matrice M(pl/3) donnant l'orientation relative du dispositif inertiel d'attitude D3 par rapport à la plateforme, fournie par septième sous-étape (258).

10. Système d' affichage tête haute porté pour rendre conforme l'affichage d'informations de pilotage d'un aéronef sur un afficheur avec le monde réel extérieur selon la revendication 9, dans lequel la sixième sous-étape (256) consiste à :

.- amener la plateforme (24) mise à l'horizontale sur une rose et positionner la plateforme (24) de sorte qu'un point remarquable dans le paysage, situé au loin de la rose et dont on connait la latitude et la longitude, soit en vue de la caméra (52) de l'équipement inertiel augmenté D3p+, prendre une photographie par la caméra (52) et transférer la photographie au calculateur d'harmonisation, puis

**EP 3 502 845 B1**

.- traiter la photographie en relevant la position du point remarquable, et en déterminant le gisement du point remarquable par rapport à la caméra, et donc par rapport au dispositif inertiel d'attitude D3, à partir de la connaissance du site et du roulis fournis par le dispositif inertiel d'attitude, et de la connaissance de la matrice d'orientation M(pl/3) relative de la plateforme de l'aéronef par rapport au dispositif inertiel d'attitude D3 ; et.

la septième sous-étape (258) consiste à déterminer le gisement du point remarquable par rapport à la plateforme (24) à partir de la connaissance de la latitude et longitude du point remarquable, de la latitude et la longitude de la plateforme et de l'angle du cap de la plateforme lu sur la rose.

11. Système d'affichage tête haute porté pour rendre conforme l'affichage d'informations de pilotage d'un aéronef sur un afficheur avec le monde extérieur selon l'une quelconque des revendications 6 à 10, dans lequel l'équipement inertiel augmenté (54) D3p+ comporte un dispositif de fixation de type ventouse.

**Patentansprüche**

1. Verfahren zum dualen Harmonisieren eines getragenen Head-up-Anzeigesystems (2), um die Anzeige von Informationen für die Steuerung eines Flugzeugs auf einem Display mit der realen Außenwelt in Einklang zu bringen,

wobei das getragene Head-up-Anzeigesystem Folgendes umfasst:

- ein transparentes getragenes Head-up-Display (12) D0,
- ein Subsystem zum Erkennen der Kopfhaltung DDP (16) mit einem beweglichen ersten Verfolgungselement (18) D1, das fest mit dem transparenten Display D0 verbunden ist, einem festen zweiten Element (22) D2, das fest mit der Plattform (24) des Flugzeugs verbunden ist, und einem Mittel zum Messen und Bestimmen der relativen Orientierung M12 des beweglichen ersten Verfolgungselements D1 in Bezug auf eine Referenzmarkierung des festen zweiten Elements D2, das mit der Plattform (24) verbunden ist,
- eine Lageträgheitsvorrichtung (30) D3 zum Liefern der relativen Lage M3t der Plattform (24) in Bezug auf eine mit der Erde verbundene terrestrische Markierung, die abnehmbar und zum festen Fixieren an der Plattform (24) an einer Windschutzscheibe des Cockpits für eine beliebige Betriebsdauer des Flugzeugs geeignet ist,
- ein Harmonisierungssubsystem (34) des getragenen Head-up-Anzeigesystems, um die Anzeige von Steuerungsinformationen auf dem Display D0 mit der realen Außenwelt in Einklang zu bringen, wobei das Harmonisierungssubsystem einen Harmonisierungsrechner (36) und eine Mensch-System-Schnittstelle (38) zum Verwalten und Ausführen der Implementierung des dualen Harmonisierungsprozesses aufweist,

wobei das duale Harmonisierungsverfahren **dadurch gekennzeichnet ist, dass** es Folgendes umfasst:

- einen ersten Schritt (204) des Lieferns einer erweiterten Trägheitsausrüstung D3p+, die die Lageträgheitsvorrichtung D3 des Flugzeugs und eine Kamera zum Aufnehmen eines oder mehrerer Fotos der realen Außenwelt fest in einer Einheit integriert, wobei die Kamera und die Lageträgheitsvorrichtung D3 des Flugzeugs fest verbunden sind;
- einen zweiten Schritt (206) des Erfassens von Messwerten $K_i$, in dem eine Reihe aus einer ganzen Zahl N, die gleich oder größer 3 ist, von verschiedenen Anvisierungen Vi durchgeführt werden, wobei i von 1 bis N variiert, durchgeführt über das halbtransparente Display D0 unter Ausrichtung unterschiedlicher Bilder von Rang i mit der realen Außenwelt, mit Image(i) bezeichnet, eingefroren auf dem Display D0, die jeweils ein und dasselbe Foto darstellen, das vor der ersten Anvisierung V1 von der Kamera der erweiterten Trägheitsausrüstung D3p+ aufgenommen wurde, gesehen mit einer vorbestimmten unterschiedlichen Winkelorientierung Oi, ausgedrückt als drei Gier-, Nick-, und Roll-Eulerwinkel, entsprechend einer Matrix M(Image(i)/0) der Markierung "Image(i)" des Bildes von Rang i zur Markierung "0" des Display D0, und wobei für jede ausgeführte Anvisierung Vi, wobei i von 1 bis N variiert, das Subsystem zum Erkennen der Haltung DDP die entsprechende relative Orientierung $\hat{K}_l$ des ersten Verfolgungselements D1 in Bezug auf das feste zweite mit der Plattform des Flugzeugs verbundene Element D2 misst und bestimmt; dann
- einen dritten Schritt (208), in dem der duale Harmonisierungsrechner gemeinsam die relative Orientierungsmatrix M01 zwischen dem Display D0 in einer gekippten Position und dem ersten Verfolgungselement D1 und die relative Orientierungsmatrix M23 zwischen dem festen zweiten Element D2 des Subsystems (16) zum Erkennen er Haltung DDP und der Lageträgheitsvorrichtung (30) D3 jeweils als die rechte Matrix $\hat{D}$ beziehungsweise. die linke Matrix $\hat{G}$ berechnet, die gemeinsame Lösungen des Harmonisierungsgleichungssystems sind: $\hat{U}_i = \hat{G} \cdot \hat{K}_i \cdot \hat{D}$, wobei i von 1 bis N variiert, wobei $\hat{U}_l$ die Transponierte der Matrix M(Image(i)/0) ist.

2.  Verfahren zur dualen Harmonisierung eines getragenen Head-up-Anzeigesystems nach Anspruch 1, wobei

    das Minimum der erforderlichen Anzahl N von Messwerten von der Anzahl L der Winkelfreiheitsgrade der fehlerhaften oder nicht verwertbaren Rotationen M01 und M3t des HMD-Anzeigesystems abhängt, wobei die Anzahl L eine ganze Zahl gleich oder größer 1 und gleich oder kleiner 6 ist, und
    die Lösung des Gleichungssystems $\hat{U}_i = \hat{G} \cdot \hat{K}_i \cdot \hat{D}$, wobei i von 1 bis N variiert, einen Korrekturoperator $\pi(.)$ nutzt, der eine beliebige Matrix A in eine 3x3-Quadratmatrix von Rotation $\pi(A)$ transformiert, die im Sinne der kleinsten Quadrate am nächsten an allen Termen der Matrix $\pi(A)$ - A über alle 3x3 Rotationsmatrizen liegt, um die Rechtsdrehung $\hat{D}$ und die Linksdrehung $\hat{G}$ zu bestimmen.

3.  Verfahren zum dualen Harmonisieren eines getragenen Head-up-Anzeigesystems nach Anspruch 2, bei dem

    die Zahl N gleich oder größer 3 ist, und
    der dritte Schritt (208) des Lösens des dualen Harmonisierungsgleichungssystems einen ersten Satz (232) von Teilschritten umfasst, bestehend aus:

    - in einem ersten Teilschritt (234), Auswählen eines "Pivot"-Messwertes als den ersten Messwert unter den N Messwerten, der i gleich 1 entspricht, und für i = 2, ..., N, der Rotationsmatrizen $\hat{U}_{1,i}$ und $\hat{K}_{1,i}$ mit Hilfe der Gleichungen: $\hat{U}_{1,i} = \hat{U}_1^T \cdot \hat{U}_i$ und $\hat{K}_{1,i} = \hat{K}_1^T \cdot \hat{K}_i$ berechnet werden; dann
    - in einem zweiten Teilschritt (236), Bestimmen für i = 2, ..., N, der Haupteinheitsvektoren der Rotationen $\hat{U}_{1,i}$ und $\hat{K}_{1,i}$, als $\vec{u}_i$ beziehungsweise $\vec{k}_i$ bezeichnet; dann
    - in einem dritten Teilschritt (238), Berechnen der rechten Matrix $\hat{D}$, d.h. M01, mit Hilfe der Gleichung :

$$\widehat{D} = \pi \left( \sum_{i \geq 2} \left( \vec{k}_i \cdot \vec{u}_i^T \right) \right)$$

    dann
    - in einem vierten Teilschritt (240), Bestimmen der linksdrehenden Matrix $\hat{G}$; d.h. M23, auf der Basis der im dritten Teilschritt (238) berechneten Matrix $\hat{D}$ mit Hilfe der Gleichung:

$$\widehat{G} = \pi \left( \sum_{i > 1} \left( \widehat{U}_i \cdot \widehat{D}^T \cdot \widehat{K}_i^T \right) \right)$$
.

4.  Verfahren zum dualen Harmonisieren eines Head-up-Anzeigesystems nach einem der Ansprüche 1 bis 3,

    wobei das getragene Head-up-Anzeigesystem ferner eine Positioniervorrichtung Dp des Flugzeugs enthält; und umfassend einen vierten Schritt (210) des Bestimmens der relativen Orientierung M(pl/3) der Plattform des Flugzeugs in Bezug auf die Lageträgheitsvorrichtung D3,
    wobei der vierte Schritt (210) des Bestimmens der relativen Orientierung M(pl/3) einen zweiten Satz (252) von Teilschritten umfasst, bestehend aus:

    - in einem fünften Teilschritt (254), Bringen der Plattform des Flugzeugs in die Horizontale und Berechnen einer Matrix M(pl1/3), deren relative Gierung unbekannt ist, zum Kompensieren der relativen Nick- und Rollwinkel zwischen der Lageträgheitsvorrichtung D3 und der Plattform, so dass: M(3/t)*M(pl1/3)= M(p/t), wobei M(p/t) eine Matrix der theoretischen relativen Orientierung der Plattform in Bezug auf die Erde ist, die nur eine Gierungskomponente enthält und für die der Nick- und der Rollwinkel null sind, und

    wobei M(3/t) eine Matrix der relativen Orientierung der Plattform in Bezug auf die Erde ist, die von der Lageträgheitsvorrichtung D3 gemessen wird; dann

    - in einem sechsten Teilschritt (256), Bestimmen der Gierung eines Kennpunkts in der Landschaft, der sich in der Ferne vor und in Sichtweite der Kamera (52) befindet und dessen Breiten- und Längengrad bekannt ist, in Bezug auf die Lageträgheitsvorrichtung D3, mittels der Kamera der erweiterten Trägheitsvorrichtung D3p+,

* durch Aufnehmen einer Fotografie durch die Kamera (52) und Übertragen der Fotografie zum Harmonisierungsrechner, dann
* durch Bearbeiten der Fotografie durch Nehmen der Position des Kennpunkts und Bestimmen der Gierung des Kennpunkts in Bezug auf die Kamera und somit in Bezug auf die Lageträgheitsvorrichtung D3, auf der Basis der Kenntnis der von der Lageträgheitsvorrichtung gelieferten Nick- und Rollwerte und der Kenntnis der relativen Orientierungsmatrix M(pl/3) der Plattform des Flugzeugs in Bezug auf die Lageträgheitsvorrichtung D3; dann

- in einem siebten Teilschritt (258), Bestimmen der Gierung des Kennpunkts relativ zu der Plattform auf der Basis der Kenntnis des Breiten- und Längengrads des Kennpunkts, des Breiten- und Längengrads der Plattform und des Plattformkurswinkels, der von einem Mittel zum präzisen Liefern des Kurses der Plattform geliefert wird; dann
- in einem achten Schritt (260), Ableiten der Gierung der Lageträgheitsvorrichtung D3 davon in Bezug auf die Plattform, Vervollständigen der Matrix M(pl1/3), um die Matrix M(pl/3) zu erhalten, die die relative Orientierung der Lageträgheitsvorrichtung D3 in Bezug auf die Plattform des Flugzeugs angibt; dann
- in einem neunten Teilschritt (262), Bestimmen der relativen Orientierung des festen zweiten Elements D2 des Subsystems zum Erkennen der Haltung DDP in Bezug auf die Plattform (24) auf der Basis der relativen Orientierung M23 des festen zweiten Elements D2 des Subsystems zum Erkennen der Haltung DDP in Bezug auf die Lageträgheitsvorrichtung D3, durch den dritten Schritt (208) geliefert, und auf der Basis der Matrix M(pl/3), die die relative Orientierung der Lageträgheitsvorrichtung D3 in Bezug auf die Plattform angibt, durch den siebten Teilschritt (258) geliefert.

5. Verfahren zum dualen Harmonisieren eines getragenen Head-up-Anzeigesystems nach Anspruch 4, wobei der sechste Teilschritt (256) besteht aus:

- Bringen der Plattform (24) in die Horizontale auf einer Rose und Positionieren der Plattform (24) so, dass ein Kennpunkt in der Landschaft, der fern von der Rose ist und dessen Breiten- und Längengrad bekannt sind, in Sichtweite der Kamera der erweiterten Trägheitsausrüstung D3p+ steht, Aufnehmen einer Fotografie mit der Kamera (52) und Übertragen der Fotografie zum Harmonisierungsrechner (36), dann
- Bearbeiten der Fotografie durch Nehmen der Position des Kennpunkts und Bestimmen der Gierung des Kennpunkts in Bezug auf die Kamera und somit in Bezug auf die Lageträgheitsvorrichtung D3 auf der Basis der Kenntnis der von der Lageträgheitsvorrichtung gelieferten Nick- und Rollwerte und der Kenntnis der relativen Orientierungsmatrix M(pl/3) der Plattform des Flugzeugs in Bezug auf die Lageträgheitsvorrichtung D3; und der siebte Teilschritt (258) besteht aus das Bestimmen der Gierung des Kennpunkts in Bezug auf die Plattform auf der Basis der Kenntnis des Breiten- und Längengrads des Kennpunkts, des Breiten- und Längengrads der Plattform und des von der Rose abgelesenen Kurswinkels der Plattform (24).

6. Getragenes Head-up-Anzeigesystem zum In-Einklang-Bringen der Anzeige von Informationen zur Steuerung eines Flugzeugs auf einem Display mit der realen Außenwelt, das Folgendes umfasst:

- ein transparentes getragenes Head-up-Display (12) D0,
- ein Subsystem zum Erkennen der Kopfhaltung DDP (16) mit einem ersten beweglichen Verfolgungselement (18) D1, das fest am transparenten Display D0 montiert ist, einem festen zweiten Element (22) D2, das fest mit der Plattform (24) des Flugzeugs (4) verbunden ist, und einem Mittel (26) zum Messen und Bestimmen der relativen Orientierung M12 des beweglichen ersten Verfolgungselements (18) D1 in Bezug auf eine Referenzmarkierung des mit der Plattform (24) verbundenen festen zweiten Elements (22) D2,
- eine Lageträgheitsvorrichtung (30) D3 zum Liefern der relativen Lage M3t der Plattform (24) in Bezug auf eine mit der Erde verbundene terrestrische Markierung, die abnehmbar und zum festen Fixieren an der Plattform an einer Windschutzscheibe des Cockpits für eine beliebige Betriebsdauer des Flugzeugs (4) geeignet ist,
- ein duales Harmonisierungssubsystem (34) des getragenen Head-up-Anzeigesystems, um die Anzeige von Steuerungsinformationen auf dem Display D0 mit der realen Außenwelt in Einklang zu bringen, wobei das duale Harmonisierungssubsystem (34) einen dualen Harmonisierungsrechner (36) und eine Mensch-System-Schnittstelle (38) zum Verwalten und Ausführen der Implementierung des dualen Harmonisierungsprozesses aufweist,

wobei das getragene Head-up-Anzeigesystem **dadurch gekennzeichnet ist, dass**:

- das duale Harmonisierungssubsystem (34) auch eine Kamera (52) zum Aufnehmen eines oder mehrerer Fotos der realen Außenwelt umfasst, und die Lageträgheitsvorrichtung (30) D3 des Flugzeugs und die Kamera (52) zusammen in einer erweiterten Trägheitsausrüstung (54) D3p+ integriert sind, wobei die erweiterte Trägheitsausrüstung (54) D3p+ bewegbar ist und schnell und einfach fixiert werden kann, und die Kamera (52) und die Lageträgheitsvorrichtung (30) D3 des Flugzeugs fest verbunden sind;

wobei das duale Harmonisierungssubsystem (34) konfiguriert ist zum:

- in einem zweiten Schritt (206) des Erfassens von Messwerten $\hat{K}_l$, Durchführen einer Reihe aus einer ganzen Zahl N, die gleich oder größer 3 ist, von unterschiedlichen Anvisierungen Vi, wobei i von 1 bis N variiert, durch das halbtransparente Display D0 unter Ausrichtung unterschiedlicher Bilder von Rang i mit der realen Außenwelt, mit Image(i) bezeichnet, eingefroren auf dem Display D0, und die jeweils ein und dasselbe Foto darstellen, das vor der ersten Anvisierung V1 durch die Kamera (52) der erweiterten Trägheitsausrüstung D3p+ aufgenommen wurde, gesehen mit einer vorbestimmten unterschiedlichen Winkelorientierung Oi, ausgedrückt als drei Gier-, Nick-, und Roll-Eulerwinkel, entsprechend einer Matrix M(Image(i)/0) der Markierung "Image(i)" des Bildes von Rang i zur Markierung "0" des Display D0, und für jede ausgeführte Anvisierung Vi, wobei i von 1 bis N variiert, Messen und Bestimmen, durch das Subsystem zur Erkennung der Haltung DDP, der entsprechenden relativen Orientierung $\hat{K}_l$ des ersten Verfolgungselements D1 in Bezug auf das zweite feste mit der Plattform des Flugzeugs verbundene Element D2; dann

- in einem dritten Schritt (208), Berechnen, mit dem dualen Harmonisierungsrechner, der relativen Orientierungsmatrix M01 zwischen dem Display DO in einer gekippten Position und dem ersten Verfolgungselement D1 und der relativen Orientierungsmatrix M23 zwischen dem festen zweiten Element D2 des Subsystems zur Erkennung der Haltung DDP und der Lageträgheitsvorrichtung (30) D3 als die rechte Matrix $\hat{D}$ beziehungsweise die linke Matrix $\hat{G}$ , die gemeinsame Lösungen des dualen Harmonisierungsgleichungssystems sind: $\hat{U}_i = \hat{G} \cdot \hat{K}_i \cdot \hat{D}$ , wobei i von 1 bis N variiert, wobei $\hat{U}_l$ die Transponierte der Matrix M(Image(i)/0) ist.

7. Getragenes Head-up-Anzeigesystem zum In-Einklang-Bringen der Anzeige von Informationen zur Steuerung eines Flugzeugs auf einem Display mit der realen Außenwelt nach Anspruch 6, wobei:

das Minimum der erforderlichen Anzahl von Messwerten N von der Anzahl L von Winkelfreiheitsgraden der fehlerhaften oder nicht verwertbaren Rotationen M01 und M3t des HMD-Anzeigesystems abhängt, wobei die Anzahl L eine ganze Zahl gleich oder größer 1 und gleich oder kleiner 6 ist, und der duale Harmonisierungsrechner (36) konfiguriert ist zum Lösen des Gleichungssystems $\hat{U}_i = \hat{G} \cdot \hat{K}_i \cdot \hat{D}$, wobei i von 1 bis N variiert, im dritten Schritt durch Anwenden eines Korrekturoperators $\pi(.)$, der eine beliebige Matrix A in eine 3x3-Quadratmatrix von Rotation $\pi(A)$ transformiert, die im Sinne der kleinsten Quadrate am nächsten an allen Termen der Matrix $\pi(A)$ - A über alle 3x3-Rotationsmatrizen liegt, um die Rechtsdrehung $\hat{D}$ und die Linksdrehung $\hat{G}$ zu bestimmen.

8. Getragenes Head-up-Anzeigesystem zum In-Einklang-Bringen der Anzeige von Informationen zur Steuerung eines Flugzeugs auf einem Display mit der realen Außenwelt nach Anspruch 6, wobei:

die Zahl N gleich oder größer 3 ist, und der dritte Schritt (208) des Lösens des dualen Harmonisierungsgleichungssystems, der vom Harmonisierungsrechner (36) durchgeführt wird, einen ersten Satz (232) von Teilschritten umfasst, bestehend aus:

- in einem ersten Teilschritt (234), Auswählen eines "Pivot"-Messwertes als den ersten Messwert unter den N Messwerten, der i gleich 1 entspricht, und für i = 2, ..., N, die Rotationsmatrizen $\hat{U}_{1,i}$ und $\hat{K}_{1,i}$; mit Hilfe der Gleichungen: $\hat{U}_{1,i} = \hat{U}_1^T \cdot \hat{U}_i$ und $\hat{K}_{1,i} = \hat{K}_1^T \cdot \hat{K}_i$ berechnet werden; dann
- in einem zweiten Teilschritt (236), Bestimmen für i = 2, ..., N, der Haupteinheitsvektoren der Rotationen $\hat{U}_{1,i}$ und $\hat{K}_{1,i}$, jeweils als $\vec{u}_i$ und $\vec{k}_i$ bezeichnet; dann
- in einem dritten Teilschritt (238), Berechnen der rechten Matrix $\hat{D}$, d.h. M01, mit Hilfe der Gleichung :

$$\widehat{D} = \pi\left(\sum_{i \geq 2}\left(\vec{k}_i \cdot \vec{u}_i^{\ T}\right)\right)$$

dann

- in einem vierten Teilschritt (240), Bestimmen der linksdrehenden Matrix $\hat{G}$; d.h. M23, auf der Basis der im dritten Teilschritt (238) berechneten Matrix D mit Hilfe der Gleichung :

$$\widehat{G} = \pi\left(\sum_{i > 1}\left(\widehat{U}_i \cdot \widehat{D}^T \cdot \widehat{K}_i^{\ T}\right)\right)$$

9. Getragenes Head-up-Anzeigesystem zum In-Einklang-Bringen der Anzeige von Informationen zur Steuerung eines Flugzeugs auf einem Display mit der realen Außenwelt nach Anspruch 8,

das ferner eine Positioniervorrichtung Dp (32) des Flugzeugs enthält; und
wobei der duale Harmonisierungsrechner (37) und die Mensch-System-Schnittstelle (38) des Harmonisierungssubsystems (34) zum Durchführen eines vierten Schritts (210) des Bestimmens der relativen Orientierung M(pl/3) der Flugzeugplattform in Bezug auf die Lageträgheitsvorrichtung D3 konfiguriert sind,
wobei der vierte Schritt (210) des Bestimmens der relativen Orientierung M(pl/3) einen zweiten Satz (252) von Teilschritten umfasst, bestehend aus:

- in einem fünften Teilschritt (254), Bringen der Plattform des Flugzeugs in die Horizontale und Berechnen einer Matrix M(pl1/3), deren relative Gierung unbekannt ist, zum Kompensieren der relativen Nick- und Rollwinkel zwischen der Lageträgheitsvorrichtung D3 und der Plattform, so dass: M(3/t)*M(pl1/3)= M(p/t), wobei M(p/t) eine Matrix der theoretischen relativen Orientierung der Plattform in Bezug auf die Erde ist, die nur eine Gierungskomponente enthält und für die der Nickwinkel und der Rollwinkel null sind, und

wobei M(3/t) eine Matrix der relativen Orientierung der Plattform in Bezug auf die Erde ist, wie von der Lageträgheitsvorrichtung D3 gemessen; dann

- in einem sechsten Teilschritt (256), Bestimmen der Gierung eines Kennpunkts in der Landschaft, der sich in der Ferne vor und in Sichtweite der Kamera (52) befindet und dessen Breiten- und Längengrad bekannt ist, in Bezug auf die Lageträgheitsvorrichtung D3, mittels der Kamera (52) der erweiterten Trägheitsvorrichtung D3p+,

* durch Aufnehmen einer Fotografie durch die Kamera (52) und Übertragen der Fotografie zum Harmonisierungsrechner, dann
* durch Bearbeiten der Fotografie durch Nehmen der Position des Kennpunkts und Bestimmen der Gierung des Kennpunkts in Bezug auf die Kamera und somit in Bezug auf die Lageträgheitsvorrichtung D3, auf der Basis der Kenntnis der von der Lageträgheitsvorrichtung gelieferten Nick- und Rollwerte und der Kenntnis der relativen Orientierungsmatrix M(pl/3) der Plattform (24) des Flugzeugs (4) in Bezug auf die Lageträgheitsvorrichtung D3; dann

- in einem siebten Teilschritt (258), Bestimmen der Gierung des Kennpunkts in Bezug auf die Plattform (24) auf der Basis der Kenntnis des Breiten- und Längengrads des Kennpunkts, des Breiten- und Längengrads der Plattform (24) und des Plattformkurswinkels, der von einem Mittel zum präzisen Liefern des Kurses der Plattform geliefert wird; dann
- in einem achten Schritt (260), Ableiten der Gierung der Lageträgheitsvorrichtung D3 davon in Bezug auf die Plattform, Vervollständigen der Matrix M(pl1/3), um die Matrix M(pl/3) zu erhalten, die die relative Orientierung der Lageträgheitsvorrichtung (30) D3 in Bezug auf die Plattform des Flugzeugs angibt; dann
- in einem neunten Teilschritt (262), Bestimmen der relativen Orientierung des festen zweiten Elements D2 des Subsystems zum Erkennen der Haltung DDP in Bezug auf die Plattform auf der Basis der relativen Orientierung M23 des festen zweiten Elements D2 des Subsystems zum Erkennen der Haltung DDP (16) in Bezug auf die Lageträgheitsvorrichtung D3, durch den dritten Schritt (208) geliefert, und auf der Basis der Matrix M(pl/3), die die relative Orientierung der Lageträgheitsvorrichtung D3 in Bezug auf die Plattform angibt, durch den siebten Teilschritt (258) geliefert.

10. Getragenes Head-up-Anzeigesystem zum In-Einklang-Bringen der Anzeige von Informationen zur Steuerung eines Flugzeugs auf einem Display mit der realen Außenwelt nach Anspruch 9, wobei der sechste Teilschritt (256) besteht aus:

- Bringen der Plattform (24) in die Horizontale auf einer Rose und Positionieren der Plattform (24) so, dass ein Kennpunkt in der Landschaft, der fern von der Rose ist und dessen Breiten- und Längengrad bekannt sind, in Sichtweite der Kamera der erweiterten Trägheitsausrüstung D3p+ steht, Aufnehmen einer Fotografie mit der Kamera (52) und Übertragen der Fotografie zum Harmonisierungsrechner, dann
- Bearbeiten der Fotografie durch Nehmen der Position des Kennpunkts und Bestimmen der Gierung des Kennpunkts in Bezug auf die Kamera und somit in Bezug auf die Lageträgheitsvorrichtung D3 auf der Basis der Kenntnis der von der Lageträgheitsvorrichtung gelieferten Nick- und Rollwerte und der Kenntnis der relativen Orientierungsmatrix M(pl/3) der Plattform des Flugzeugs in Bezug auf die Lageträgheitsvorrichtung D3; und der siebte Teilschritt (258) besteht aus das, Bestimmen der Gierung des Kennpunkts in Bezug auf die Plattform (24) auf der Basis der Kenntnis des Breiten- und Längengrads des Kennpunkts, des Breiten- und Längengrads der Plattform und des von der Rose abgelesenen Kurswinkels der Plattform besteht.

11. Getragenes Head-up-Anzeigesystem zum In-Einklang-Bringen der Anzeige von Informationen zur Steuerung eines Flugzeugs auf einem Display mit der realen Außenwelt nach einem der Ansprüche 6 bis 10, wobei die erweiterte Trägheitsausrüstung (54) D3p+ eine Befestigungsvorrichtung des Saugnapftyps umfasst.

## Claims

1. Dual harmonisation method for a worn head-up display system (2) for making the display of piloting information of an aircraft on a display conform with the outside real world,

the worn head-up display system comprising

- a transparent worn head-up display (12) D0,
- a head posture detection subsystem DDP (16) having a mobile tracking first element (18) D1 securely attached to the transparent display D0, a fixed second element (22) D2 securely linked to the platform (24) of the aircraft, and a means for measuring and determining the relative orientation M12 of the mobile tracking first element D1 relative to a reference frame of the fixed second element D2 linked to the platform (24),
- an attitude inertial device (30) D3 for supplying the relative attitude M3t of the platform (24) relative to a terrestrial reference frame linked to the Earth, that is removable and that can be securely fixed to the platform (24) on a windshield of the cockpit for any period of operation of the aircraft,
- a harmonisation sub-system (34) for the worn head-up display system for making the display of piloting information on the display D0 conform with the outside real world, the harmonisation subsystem having a harmonisation computer (36) and a human-system interface (38) for managing and performing the implementation of the dual harmonisation method,

the dual harmonisation method being **characterised in that** it comprises:

- a first step (204) of provision of an augmented inertial equipment item D3p+ securely incorporating, in one and the same assembly, the attitude inertial device D3 of the aircraft, and a camera for taking one or more photos of the outside real world, the camera and the attitude inertial device D3 of the aircraft being securely linked;
- a second step (206) of acquisitions of measurements $\hat{K}_i$, in which a series of an integer number N, greater than or equal to 3, of different sightings Vi are performed, i varying from 1 to N, performed through the semi-transparent display D0, by aligning, with the outside real world, different images of rank i, denoted by image(i), frozen on said display D0, each representing one and the same photo, taken before the first sighting V1 by the camera of the augmented inertial equipment item D3p+, seen with a predetermined different angular orientation Oi, expressed in terms of three Euler angles of bearing, pitch and roll, corresponding to a matrix M(image(i)/0) of the frame "image(i)" of the image of rank i to the frame "0" of the display D0, and wherein, for each sighting Vi performed, i varying from 1 to N, the posture detection subsystem DDP measures and determines the corresponding relative orientation $\hat{K}_i$ of the tracking first element D1 relative to the fixed second element D2, linked to the platform of the aircraft; then

- a third step (208) in which the dual harmonisation computer jointly computes the matrix of relative orientation M01 between the display D0 in a tilted position and the tracking first element D1 and the matrix of relative orientation M23 between the fixed second element D2 of the posture detection subsystem (16) DDP and the attitude inertial device (30) D3 as, respectively, the right matrix $\hat{D}$ and the left matrix $\hat{G}$ , joint solutions of the system of harmonisation equations: $\hat{U}_i = \hat{G} \cdot \hat{K}_i \cdot D$ , i varying from 1 to N, wherein $U_j$ is the transpose of the matrix M(image(i)/0).

2. Dual harmonisation method for a worn head-up display system according to claim 1, wherein

the minimum of the number of measurements N required depends on the number L of degrees of angular freedom of the rotations M01 and M3t of the display system HMD that are erroneous or unusable, said number L being an integer greater than or equal to 1 and less than or equal to 6, and

the solving of the system of equations $\hat{U}_i = \hat{G} \cdot \hat{K}_i \cdot \hat{D}$, i varying from 1 to N, uses a rectification operator $\pi(.)$ which transforms any matrix A into a 3x3 square matrix of rotation $\pi(A)$ that is as close as possible, in the least square sense, to all the terms of the matrix $\pi(A) - A$ over all of the 3x3 rotation matrixes to determine the rotation to the right $\hat{D}$ and the rotation to the left $\hat{G}$ .

3. Dual harmonisation method for a worn head-up display system according to claim 2, wherein

the number N is greater than or equal to 3, and

the third step (208) of solving of the dual harmonisation system of equations comprises a first set (232) of substeps consisting in:

- in a first substep (234), choosing a "pivot" measurement as being the first measurement out of the N measurements and corresponding to i equal to 1, and for i = 2, ⋯ , N the rotation matrices $\hat{U}_{1,i}$ and $\hat{K}_{1,i}$ are computed using the equations: $\hat{U}_{1,i} = \hat{U}_1^T \cdot \hat{U}_i$ and $\hat{K}_{1,i} = \hat{K}_1^T \cdot \hat{K}_i$ ; then

- in a second substep (236) determining, for i = 2, ⋯ , N, the main unitary vectors of the rotations $\hat{U}_{1,i}$ and $\hat{K}_{1,i}$, denoted respectively by $\vec{u}_i$ and $\vec{k}_i$ ; then

- in a third substep (238), computing the right matrix $\hat{D}$, i.e. M01, using the equation:

$$\widehat{D} = \pi \left( \sum_{i \geq 2} \left( \vec{k}_i \cdot \vec{u}_i^{\ T} \right) \right)$$

then

- in a fourth substep (240), determining the left rotation matrix $\hat{G}$; i.e. M23, from the matrix $\hat{D}$ computed in the third substep (238), using the equation:

$$\widehat{G} = \pi \left( \sum_{i \geq 1} \left( \widehat{U}_i \cdot \widehat{D}^T \cdot \widehat{K}_i^{\ T} \right) \right)$$

4. Dual harmonisation method for a head-up display system according to any one of claims 1 to 3,

wherein the worn head-up display system also has an aircraft positioning device Dp; and

comprising a fourth step (210) of determination of the relative orientation M(pl/3) of the platform of the aircraft relative to the attitude inertial device D3,

the fourth step (210) of determination of the relative orientation M(pl/3) comprising a second set (252) of substeps consisting in:

- in a fifth substep (254), placing the platform of the aircraft horizontal and computing a matrix M(pl1/3), whose relative bearing is unknown, for compensation of the relative pitch and roll angles between the attitude inertial device D3 and the platform such that: M(3/t)*M(pl1/3)= M(p/t),

M(p/t) being a matrix of theoretical relative orientation of the platform relative to the Earth having only a bearing component and for which the pitch angle and the roll angle are nil, and

M(3/t) being a matrix of relative orientation of the platform relative to the Earth measured by the attitude inertial device D3; then

- in a sixth substep (256) determining the bearing of a characteristic point in the landscape, situated far in front and in view of the camera (52) and for which the latitude and the longitude are known, relative to the attitude inertial device D3 by using the camera of the augmented inertial device D3p+,

* by taking a photograph with the camera (52) and transferring the photograph to the harmonisation computer, then

* by processing the photograph by noting the position of the characteristic point, and by determining the bearing of the characteristic point relative to the camera, and therefore relative to the attitude inertial device D3, from the knowledge of the pitch and of the roll provided by the attitude inertial device, and the knowledge of the matrix of relative orientation M(pl/3) of the platform of the aircraft relative to the attitude inertial device D3; then

- in a seventh substep (258), determining the bearing of the characteristic point relative to the platform from the knowledge of the latitude and longitude of the characteristic point, of the latitude and the longitude of the platform and of the angle of heading of the platform provided by a means for accurately providing the heading of the platform; then

- in an eighth step (260) deducing therefrom the bearing of the attitude inertial device D3 relative to the platform, completing the matrix M(pl1/3) to obtain the matrix M(pl/3) indicating the relative orientation of the attitude inertial device D3 relative to the platform of the aircraft; then

- in a ninth substep (262), determining the relative orientation of the fixed second element D2 of the posture detection subsystem DDP relative to the platform (24) from the relative orientation M23 of the fixed second element D2 of the posture detection subsystem DDP relative to the attitude inertial device D3, supplied by the third step (208), and from the matrix M(pl/3) indicating the relative orientation of the attitude inertial device D3 relative to the platform, supplied by the seventh substep (258).

5. Dual harmonisation method for a worn head-up display system according to claim 4, wherein the sixth substep (256) consists in:

- positioning the horizontally-placed platform (24) on a compass card and positioning the platform (24) such that a characteristic point in the landscape, situated far from the compass card and the latitude and the longitude of which are known, is in view of the camera of the augmented inertial equipment item D3p+, taking a photograph with the camera (52) and transferring the photograph to the harmonisation computer (36), then

- processing the photograph by noting the position of the characteristic point, and by determining the bearing of the characteristic point relative to the camera and therefore relative to the attitude inertial device D3, from the knowledge of the pitch and the roll supplied by the attitude inertial device, and from the knowledge of the matrix of relative orientation M(pl/3) of the platform of the aircraft relative to the attitude inertial device D3; and the seventh substep (258) consists in determining the bearing of the characteristic point relative to the platform from the knowledge of the latitude and longitude of the characteristic point, of the latitude and the longitude of the platform and of the angle of heading of the platform (24) read on the compass card.

6. Worn head-up display system for making the display of piloting information of an aircraft on a display conform with the outside real world, comprising

- a transparent worn head-up display (12) D0,

- a head posture detection subsystem DDP (16) having a mobile tracking first element (18) D1 securely attached to the transparent display D0, a fixed second element (22) D2 securely linked to the platform (24) of the aircraft (4), and a means (26) for measuring and determining the relative orientation M12 of the mobile tracking first element (18) D1 relative to a reference frame of the fixed second element (22) D2 linked to the platform (24),

- an attitude inertial device (30) D3 for supplying the relative attitude M3t of the platform (24) relative to a terrestrial reference frame linked to the Earth, that is removable and that can be fixed securely to the platform on a windshield of the cockpit for any period of operation of the aircraft (4),

- a dual harmonisation subsystem (34) for the worn head-up display system for making the display of piloting information on the display D0 conform with the outside real world, the dual harmonisation subsystem (34) having a dual harmonisation computer (36) and a human-system interface (38) for managing and performing the implementation of the dual harmonisation method,

the worn head-up display system being **characterised in that**:

- the dual harmonisation subsystem (34) also comprises a camera (52) for taking one or more photos of the outside real world, and the attitude inertial device (30) D3 of the aircraft, and the camera (52) are incorporated together in a augmented inertial equipment item (54) D3p+, the augmented inertial equipment item (54) D3p+ being able to be moved and able to be fixed rapidly and easily, and the camera (52) and the attitude inertial device (30) D3 of the aircraft being securely linked;

wherein the dual harmonisation subsystem (34) is configured to:

- in a second step (206) of acquisitions of measurements $\hat{K}_l$, perform a series of an integer number N, greater than or equal to 3, of different sightings Vi, i varying from 1 to N, through the semi-transparent display D0, by aligning, with the outside real world, different images of rank i, denoted by image(i), frozen on said display D0, and each representing one and the same photo, taken before the first sighting V1 by the camera (52) of the augmented inertial equipment item (54) D3p+, seen with a predetermined different angular orientation Oi, expressed in terms of three Euler angles of bearing, pitch and roll, corresponding to a matrix M(image(i)/0) of the reference frame "image(i)" of the image of rank i to the reference frame "0" of the display D0, and, for each performed sighting Vi, i varying from 1 to N, measure and determine, via the posture detection subsystem DDP, the corresponding relative orientation $\hat{K}_l$ of the tracking first element D1 relative to the fixed second element D2, linked to the platform of the aircraft; then
- in a third step (208), computing, using the dual harmonisation computer, the matrix of relative orientation M01 between the display D0 in a tilted position and the tracking first element D1 and the matrix of relative orientation M23 between the fixed second element D2 of the posture detection subsystem DDP and the attitude inertial device (30) D3 as, respectively, the right matrix $\hat{D}$ and the left matrix $\hat{G}$, joint solutions of the dual harmonisation system of equations: $\hat{U}_i = \hat{G} \cdot \hat{K}_i \cdot D$, i varying from 1 to N, wherein $\hat{U}_l$ is the transpose of the matrix M(image(i)/0).

7. Worn head-up display system for making the display of piloting information of an aircraft on a display conform with the outside real world according to Claim 6, wherein:

the minimum of the number of measurements N required depends on the number L of degrees of angular freedom of the rotations M01 and M3t of the HMD display system that are erroneous or unusable, said number L being an integer greater than or equal to 1 and less than or equal to 6, and
the dual harmonisation computer (36) is configured to solve the system of equations $\hat{U}_i = \hat{G} \cdot \hat{K}_i \cdot \hat{D}$, i varying from 1 to N, in the third step by using a rectification operator $\pi(.)$ which transforms any matrix A into a 3x3 square matrix of rotation $\pi(A)$ that is as close as possible, in the least square sense, to all the terms of the matrix $\pi(A)$ - A over all the 3x3 rotation matrices to determine the rotation to the right $\hat{D}$ and the rotation to the left $\hat{G}$.

8. Worn head-up display system for making the display of piloting information of an aircraft on a display conform with the outside real world according to Claim 6, wherein:

the number N is greater than or equal to 3, and
the third step (208) of solving of the dual harmonisation system of equations implemented by the harmonisation computer (36) comprises a first set (232) of substeps consisting in:

- in a first substep (234), choosing a "pivot" measurement as being the first measurement out of the N measurements and corresponding to i equal to 1, and for i = 2, ⋯, N the matrices of rotations $\hat{U}_{1,i}$ and $\hat{K}_{1,i}$ are computed using the equations: $\hat{U}_{1,i} = \hat{U}_1{}^T \cdot \hat{U}_i$ et $\hat{K}_{1,i} = \hat{K}_1{}^T \cdot \hat{K}_i$; then
- in a second substep (236), determining, for i = 2, ⋯, N, the main unitary vectors of the rotations $\hat{U}_{1,i}$ and $\hat{K}_{1,i}$, denoted respectively by $\vec{u}_i$ and $\vec{k}_i$; then
- in a third substep (238), computing the right matrix $\hat{D}$, i.e. M01, using the equation:

$$\widehat{D} = \pi \left( \sum_{i \geq 2} \left( \vec{k}_i \cdot \vec{u}_i^{\ T} \right) \right)$$

then

- in a fourth substep (240), determining the matrix of rotation to the left $\hat{G}$; i.e. M23, from the matrix D computed in the third step (318), using the equation:

$$\widehat{G} = \pi \left( \sum_{i \geq 1} \left( \widehat{U}_i \cdot \widehat{D}^T \cdot \widehat{K}_i^{\ T} \right) \right)$$

9.  Worn head-up display system for making a display of piloting information of an aircraft on a display conform with the outside real world according to claim 8,

   further comprising an aircraft positioning device Dp (32); and
   wherein the dual harmonisation computer (36) and the human-system interface (38) of the harmonisation sub-system (34) are configured to implement a fourth step (210) of determination of the relative orientation M(pl/3) of the platform of the aircraft relative to the attitude inertial device D3,
   the fourth step (210) of determination of the relative orientation M(pl/3) comprising a second set (252) of substeps consisting in:

     - in a fifth substep (254), placing the platform of the aircraft horizontal and computing a matrix M(pl1/3), the relative bearing of which is unknown, for compensating relative pitch and roll angles between the attitude inertial device D3 and the platform such that: M(3/t)*M(pl1/3)= M(p/t),

        M(p/t) being a matrix of theoretical relative orientation of the platform relative to the Earth having only a bearing component and for which the pitch angle and roll angle are nil, and
        M(3/t) is a matrix of relative orientation of the platform relative to the Earth measured by the attitude inertial device D3; then

     - in a sixth substep (256) determining the bearing of a characteristic point in the landscape, situated far in front and in view of the camera (52) and the latitude and longitude of which are known, relative to the attitude inertial device D3 by using the camera (52) of the augmented inertial device D3p+,

        * by taking a photograph with the camera (52) and transferring the photograph to the harmonisation computer, then
        * by processing the photograph by noting the position of the characteristic point, and by determining the bearing of the characteristic point relative to the camera, and therefore relative to the attitude inertial device D3, from the knowledge of the pitch and the roll both supplied by the attitude inertial device, and from the knowledge of the matrix of relative orientation M(pl/3) of the platform (24) of the aircraft (4) relative to the attitude inertial device D3; then

     - in a seventh substep (258), determining the bearing of the characteristic point relative to the platform (24) from the knowledge of the latitude and longitude of the characteristic point, of the latitude and the longitude of the platform (24) and of the angle of heading of the platform supplied by a means for accurately supplying the heading of the platform;
     - in an eighth step (260) deducing therefrom the bearing of the attitude inertial device D3 relative to the platform, completing the matrix M(pl1/3) to obtain the matrix M(pl/3) indicating the relative orientation of the attitude inertial device (30) D3 relative to the platform of the aircraft; then
     - in a ninth substep (262), determining the relative orientation of the fixed second element D2 of the posture detection subsystem DDP relative to the platform from the relative orientation M23 of the fixed second element D2 of the posture detection subsystem DDP (16) relative to the attitude inertial device D3, supplied by the third step (208), and from the matrix M(pl/3) indicating the relative orientation of the attitude inertial device D3 relative to the platform, supplied by the seventh sub step (258).

10. Worn head-up display system for making the display of piloting information of an aircraft on a display conform with the outside real world according to claim 9, wherein the sixth substep (256) consists in:

- positioning the horizontally-placed platform (24) on a compass card and positioning the platform (24) such that a characteristic point in the landscape, situated far from the compass card and the latitude and the longitude of which are known, is in view of the camera (52) of the augmented inertial equipment item D3p+, taking a photograph with the camera (52) and transferring the photograph to the harmonisation computer, then
- processing the photograph by noting the position of the characteristic point, and by determining the bearing of the characteristic point relative to the camera and therefore relative to the attitude inertial device D3, from the knowledge of the pitch and the roll supplied both by the attitude inertial device, and from the knowledge of the matrix of relative orientation M(pl/3) of the platform of the aircraft relative to the attitude inertial device D3; and the seventh substep (258) consists in determining the bearing of the characteristic point relative to the platform (24) from the knowledge of the latitude and longitude of the characteristic point, of the latitude and the longitude of the platform and of the angle of heading of the platform read on the compass card.

11. Worn head-up display system for making the display of pilot information of an aircraft on a display conform with the outside world according to any one of claims 6 to 10, wherein the augmented inertial equipment item (54) D3p+ comprises a sucker type fastener.

FIG.1

202

```
┌─────────────────────┐
│        204          │
└─────────────────────┘
          │
          ▼
┌─────────────────────┐
│        206          │
└─────────────────────┘
          │
          ▼
┌─────────────────────┐
│        208          │
└─────────────────────┘
          │
          ▼
┌─────────────────────┐
│        210          │
└─────────────────────┘
```

FIG.2

208

232

```
┌─────────────────────┐
│        234          │
└─────────────────────┘
          │
          ▼
┌─────────────────────┐
│        236          │
└─────────────────────┘
          │
          ▼
┌─────────────────────┐
│        238          │
└─────────────────────┘
          │
          ▼
┌─────────────────────┐
│        240          │
└─────────────────────┘
```

FIG.3

210

254

252

256

258

260

262

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015165838 A1

- WO 2009081177 A2

**Littérature non-brevet citée dans la description**

- Single point active alignment method (SPAAM) for optical see-through HMD calibration for AR. **TUCERYAN M. et al.** Augmented Reality, 2000, (ISAR 2000), Symposium on Munich, Germany. IEEE, 05 Octobre 2000, 149-158
- Calibration of head mounted displays for augmented reality applications. **JANIN A.L. et al.** Virtual Reality Annual International Symposium, 1993., 1993 IEEE Seattle, WA, USA. IEEE, 18 Septembre 1993, 246-255

- Practical Solutions for Calibration of Optical See-Through Devices. **YAKUP GENC et al.** Proceedings / International Symposium on mixed and augmented reality: ISMAR 2002. IEEE Computer Society, 30 Septembre 2002, 169
- A survey of calibration methods for optical See-Through Head-Mounted displays. **JENS GRUBERT et al.** ARXIV.ORG. Cornell University Library, 201 OLIN library Cornell university, 13 Septembre 2017